# EUROPEAN PATENT APPLICATION

(11) **EP 4 011 208 A1**
(43) Date of publication of application: **15.06.2022**
(21) Application number: 20212390.7
(22) Date of filing: 08.12.2020
(51) Int. Cl.: A01N 43/40, A01N 25/10, A01N 25/12, A01P 3/00, A01P 5/00

(54) **MICROPARTICLE COMPOSITIONS COMPRISING FLUOPYRAM**

(71) Applicant: BASF Corporation, Florham Park, NJ 07932 (US)
(72) Inventor: Oschmann, Bernd Dieter, 67056 Ludwigshafen (DE); Le, Duy Minh, Research Triangle Park, North Carolina 27709 (US); Lan, Yongqing, 67117 Limburgerhof (DE); Katz, Britta, 67056 Ludwigshafen (DE); Hermann, Olga, 67056 Ludwigshafen (DE); Baumgartner, Timo, 67056 Ludwigshafen (DE); Bummel, Tobias, 67117 Limburgerhof (DE)
(74) Representative: BASF IP Association

(57) **Abstract**

A microparticle composition comprising fluopyram, wherein fluopyram is present in the form of microparticles, which comprise solid fluopyram, which is surrounded or embedded by an aminoplast polymer, which is a polycondensation product of one or more amino compounds and one or more aldehydes.

## Description

The present invention relates to microparticle compositions comprising fluopyram, to a method of their preparation and to the use of these microparticle compositions for controlling fungi or nematodes.

### Background of Invention

Fluopyram is the INN common name of the fungicidally active compound N-{2-[3-chloro-5-(trifluoromethyl)-2-pyridyl]ethyl}-a,a,a-trifluoro-o-toluamide (CAS No 658066-35-4). Fluopyram is only sparingly soluble in water.

Fluopyram is a highly active succinate dehydrogenase inhibitor(SDHI) fungicide which efficiently controls fungi and nematodes and is inter alia used to combat soybean sudden death syndrome (SDS) and to control nematodes. However, fluopyram is known to sometimes show undesired effects on the crop known as the "halo effect". The halo effect causes yellowing of the margins of cotyledon leaves at the early stages of emergence. While the halo effect has no impact on the crop yield, it is in many cases not acceptable to the farmers.

Fungicides, such as fluopyram, are often applied in the form of dilute aqueous spray liquors, which are prepared by diluting a concentrate formulation of the fungicide with water. For this purpose, pesticide compounds may be formulated e.g. in solid forms, such as wettable powders (WP) and water-dispersible granules (WG), as well as in liquid forms, such as emulsions, emulsifiable concentrates (EC), suspoemulsions (SE) or suspension concentrates (SC). For seed treatment applications it is often applied as more concentrated formulations. For efficient encapsulation, it is of particular importance that the formulations can be easily diluted with water and that the dilution remains stable for a certain time without separation of the active ingredient, as this may cause clogging of the spraying nozzles. For ecological reasons it is preferred that the formulation does not contain large amounts of organic solvents, which principally favors solid formulations and aqueous SC formulations.

Despite the aforementioned advantages associated with the usage of SCs, there are a number of problems known to the skilled person which are sometimes encountered with SCs as a result of settling during prolonged storage or storage at elevated temperatures, the resistance of settled particles to re-suspension and the formation of crystalline material upon storage. As a consequence, the formulations may be difficult to handle and the bioefficacy may be inconsistent.

It is principally known to provide pesticidally active compounds in the form of microcapsule formulations.

Microencapsulation can be principally achieved by coacervation techniques, spray drying, fluidized-bed coating, electrostatic microencapsulation or in-situ polymerization.
These techniques provide active compound particles, wherein the active compound is surrounded by a polymeric wall material.

The most common method for microencapsulation of agrochemical materials is the interfacial polymerization. In this process, a first reactant, e.g. a polyfunctional isocyanate or acid chloride, is dissolved in the liquid active ingredient or a solution thereof, which is then dispersed in water and subjected to polymerization by addition of a polyfunctional compound having a complementary reactivity with regard to the first reactant, e.g. an diamine or diol (see e.g. US 4,107,292, US 5,705,174, US 5,910,314, WO 0027519, EP 8207, US 2004/115280). The polymerization occurring at the interface between the active substance and the aqueous phase completely encloses the fine droplets of active substance in a thin membrane of polyurea or polyamide. However, this method is not suitable for fluopyram due to its low solubility.

A further in-situ polymerization technique includes microencapsulation of liquids by using aminoplasts, such as melamine formaldehyde resins (MF resins) or urea formaldehyde resins (UF resins) or melamine formaldehyde urea resins (MUF resins).
The aminoplast resins are used in the form of their prepolymers or pre-condensates, which are added to an aqueous emulsion of the material to be encapsulated and cured by heating and/or altering the pH of the reaction mixture to effect polymerization of the prepolymers. Thereby, an aqueous suspension of the microcapsules is obtained, where the particles of the encapsulated material are surrounded by or embedded in an aminoplast polymer. A survey of this method is given in Acta Polymerica 40, (1989) No. 5, pp. 325-331 and C.A. Finch, R. Bodmeier, Microencapsulation, Ullmann's Encyclopedia of Industrial Chemistry, 6th Edition, 2001 Electronic Release). Microencapsulation of pesticides using in-situ polymerization of aminoplasts precondensates have been described several times. For example, US 4,557,755 describes the microencapsulation of water-insoluble pesticides by polymerizing an aminoplast pre-condensate, such as a melamine formaldehyde or melamine urea formaldehyde resin in an aqueous suspension of the pesticide compound in the presence of a cationic urea resin. The method is suggested for certain insecticides and fungicides.

US 5,462,915 describes an improved process for microencapsulation of water insoluble pesticides, which comprises adding to a suspension of the pesticide a liquid aminoplast prepolymer and curing the prepolymer at temperatures of above 100°C.
The method was applied for microencapsulation of water-insoluble salts of dicamba. A similar process is known from WO 00/27519, which was applied for microencapsulation of carbofuran.
WO 96/03041 describes a microcapsule composition of pesticides, wherein the microcapsules have an outer aminoplast layer and an inner wax coating deposited around pesticide compound. WO 2020/021082 discloses pesticide containing capsules of crosslinked water-soluble polymers. Modern techniques of microencapsulation include the radical suspension polymerization of water-insoluble acrylate monomers with (meth)acrylic acid and optionally polyfunctional monomers in the presence of an o/w-emulsion of the pesticide compound (see e.g. WO 2012/101070) or the radical emulsion polymerization of an aqueous monomer emulsions, wherein the pesticide is dissolved or suspended in the monomer droplets (see e.g. WO 2005/102044, WO2006/094792, WO 2006/094978). However, considerable amounts of polymer are required, which may exceed the amount of pesticide.

Although microencapsulation may improve the acute toxicity of a pesticide or reduce degradation, it is often difficult to achieve. In particular, aggregation of the pesticide particles during or after encapsulation is the main problem, if one encapsulation method, which may work for a particular pesticide compound, does not necessarily work for another pesticide compound. When trying to encapsulate a solid material in an aqueous suspension of the solid material by an in-situ-polymerization technique, the solid material tends to agglomerate thereby forming large particles of active ingredient particles, which are embedded in the polymer matrix. A thus obtained suspension is often no longer suitable for agricultural use. It remains a challenge to efficiently encapsulate solid pesticide particles by using small amounts of an encapsulating polymer.

### Summary of Invention

It is an object of the present invention to provide a formulation of fluopyram that has a good release profile, an excellent phytotoxicity profile and in particular shows reduced halo effect. Another objective was to provide microcapsules and encapsulation processes that have been optimized for fluopyram.

It was surprisingly found that microparticle compositions of solid fluopyram, wherein solid fluopyram is surrounded or embedded by an aminoplast polymer provide for an excellent biological activity of fluopyram with an improved phytotoxic profile on the crops and further a good release profile. Moreover, these microparticle compositions can be simply prepared starting from an aqueous suspension of solid fluopyram.
It was found that the amounts of aminoplast polymer required for efficient encapsulation of fluopyram are quite small and normally significantly lower than the amount of fluopyram that is encapsulated. Therefore, a first aspect of the invention relates to microparticle compositions, comprising fluopyram, wherein fluopyram is present in the form of microparticles, which comprise solid fluopyram, which is surrounded or embedded by an aminoplast polymer. Like non-encapsulated fluopyram, the microparticle compositions of the present invention provide for high fungicidal and nematicidal activity. Moreover, the microparticle compositions of the present invention provide for improved residual activity of fluopyram. Apart from that, the microparticle compositions of the present invention may provide for better crop-safety.

In the microparticle compositions of the present invention, fluopyram is not prone to degradation. Thus, the microparticle compositions of the present invention provide for both high physical and chemical stability over prolonged storage periods, while maintaining the biological efficacy of fluopyram. Moreover, microparticle compositions of the present invention can be easily formulated. Furthermore, microparticle compositions of the present invention in the form of aqueous suspensions provide for improved tank-mix compatibility, and thus can be readily tank mixed with other formulations of pesticides and do not negatively interact with other formulations regarding their dilution stability.

It was also surprisingly found that solid fluopyram can be efficiently microencapsulated by using aminoplast pre-condensates and performing the process described hereinafter. Therefore, a second aspect of the present invention relates to a process for preparing the microparticle compositions as described herein, which process comprises the following steps:
i) providing an aqueous suspension of solid fluopyram particles;
ii) adding an aminoplast pre-condensate to the aqueous suspension of the fluopyram particles;
iii) effecting the polycondensation of the aminoplast pre-condensate, e.g. by heating the aqueous suspension of step ii) at a pH, where the polycondensation of the aminoplast pre-condensate will occur at the reaction temperature.

This process results in a stable aqueous suspension, wherein fluopyram is present in the form of microparticles, which comprise solid fluopyram, which is surrounded or embedded by an aminoplast polymer. From this, the microparticles can be isolated, if necessary.

### Detailed Description of Invention

In the microparticle composition of the invention fluopyram is present in the form of microparticles, which comprise solid fluopyram as a core material. In the microparticles solid fluopyram forms the core material which is surrounded or embedded by at least one aminoplast polymer. In this context, it has to be understood that the aminoplast polymers may form a regular or irregular shell which surrounds or embeds the core material. The microparticles may have a single solid core formed by the fluopyram and a shell or matrix formed by the aminoplast polymer. It may, of course, also be possible that the microparticles have a "domain structure" which comprises a certain number of solid fluopyram particles, e.g. 3 to 1000 or 10 to 500 particles, of amorphous or crystalline fluopyram, which are embedded by the aminoplast polymer.

It is not necessary that the aminoplast polymer forms a completely closed shell.
Frequently, however, the shell will completely surround the core material like a membrane, thereby forming a barrier between the core material and the surrounding material.

Aminoplast polymers, which are also termed amino resins, amino condensation resins or amido resins are polycondensation products of one or more aldehydes, such as formaldehyde, acetaldehyde, propanal, glyoxal or glutaraldehyde, with one or more amino compounds having usually at least two primary amino groups, such as urea, thiourea, melamine, which may be wholly or partially etherified, cyanoguanamine (= dicyandiamide) and benzoguanamine. Examples of aminoplast polymers are polycondensates of melamine and formaldehyde (melamine-formaldehyde resins or MF resins), including resins derived from wholly or partially etherified melamine formaldehyde condensates, urea-formaldehyde resins (UF resins), thiourea formaldehyde resins (TUF resins), polycondensates of melamine, urea and formaldehyde (MUF resins), including resins derived from wholly or partially etherified melamine-urea-formaldehyde condensates, polycondensates of melamine, thiourea and formaldehyde (MTUF resins, including resins derived from wholly or partially etherified melamine-thiourea-formaldehyde condensates, urea-glutaraldehyde resins, benzoguanamine-formaldehyde polycondensates, dicyandiamide formaldehyde polycondensates and urea-glyoxal polycondensates. Suitable aminoplast polymers for microencapsulation are known and can be found, inter alia, in Kirk-Othmer, Encyclopedia of Chemical Technology, 3rd edition, Vol. 2, pp. 440-469, the prior art cited in the introductory part, US 4,918,317, EP 26914, EP 218887, EP 319337, EP 383,337, EP 415273, DE 19833347, DE 19835114 and WO 01/51197. In UF and TUF resins, the molar ratios of urea or thiourea to formaldehyde are generally in the range from 1:0.8 to 1:4, in particular from 1:1.5 to 1:4, especially from 1:2 to 1:3.5. If glutaraldehyde is used instead of formaldehyde, the molar ratios of urea or thiourea to glutaraldehyde may in particular be in the range from 1:1.2 to 1:3, especially in the range from 1:1.5 to 1:2.5.
Preferred aminoplast polymers are MF resins, UF resins, MTUF resins and TUF resins. Especially preferred aminoplast polymers are UF resins and MF resins.

In MF and MUF resins, the molar ratios of melamine to formaldehyde are generally in the range from 1:1.5 to 1:10, in particular from 1:2 to 1:8 preferably 1:3 to 1:6.
In MUF and MTUF resins, the molar ratios of melamine + urea or thiourea to formaldehyde are generally in the range from 1:0.8 to 1:9, in particular from 1:2 to 1:8; preferably 1:3 to 1:6. The molar ratio of urea or thiourea to melamine may be in the range from 50:1 to 1:100 and in particular from 30:1 to 1:30.
In the preparation of the aforementioned aminoplast resins, the pre-condensates may be used in the form of etherified pre-condensates of amino compound and aldehyde. In these etherified pre-condensates the methylol groups formed by the reaction of the amino groups with formaldehyde with an alkanol or an alkane diol, in particular with a C1-C4-alkanol, such as methanol, ethanol, n-propanol or n-butanol, in particular methanol, or a C2-C4-alkandiol, such as ethylene glycol. The degree of etherification of these resins can be adjusted by the molar ratio of amino groups to alkanol which is typically in the range from 10:1 to 1:10, preferably in the range from 2:1 to 1:5. The aminoplast polymer material, which surrounds or embeds the solid fluopyram, is most preferably selected from the group consisting of melamine-formaldehyde resins, including melamine-formaldehyde resins derived from wholly or partially etherified melamine-formaldehyde condensates, and urea-formaldehyde resins and mixtures thereof. Especially, the aminoplast polymer material, which surrounds or embeds the solid fluopyram, is a melamine-formaldehyde resin, in particular a melamine formaldehyde resin, which is derived from wholly or partially etherified melamine formaldehyde condensates, which may contain small amount, e.g. 1 to 20 mol.-%, based on melamine, of urea.

In the microparticle compositions of the invention, the amount of aminoplast polymer material, which surround or embed the solid fluopyram, will generally not exceed the amount of fluopyram contained in the composition and is preferably at most 40 % by weight, in particular at most 35 % by weight and especially at most 30 % by weight, based on the total amount of fluopyram and aminoplast polymers present in the formulation. The amount of aminoplast polymer material, which surround or embed the solid fluopyram, is typically from 0.5 to 40% by weight, in particular from 1 to 35% by weight and especially from 5 to 35% by weight, based on the total capsule weight, i.e. based on the total amount of fluopyram and aminoplast polymers present in the formulation.
It was surprisingly found that the halo effect of formulations of the invention is improved when the amount of aminoplast polymer material in the formulation is 10 wt% or higher, preferably 15 wt% or higher based on the total amount of fluopyram and aminoplast polymers present in the formulation. Thus, in one preferred embodiment, the amount of aminoplast polymer material in the formulation is from 15 to 40 wt%, more preferably 18 to 38, or 20 to 35 wt%, in each case based on the total amount of fluopyram and aminoplast polymers present in the formulation. The polymer material of the microparticle composition of the invention, which surrounds or embeds the solid fluopyram, may comprise further water-insoluble polymers. However, the amount of such polymers will generally not exceed 20% of the total amount of encapsulating polymer material, and will preferably not exceed 10% by weight of the total amount of polymer material, which surrounds or embeds the solid fluopyram.

In addition to the solid fluopyram, the core material of the microparticles may contain an oil, e.g. a hydrocarbon solvent, such as an aromatic, paraffinic or isoparaffinic hydrocarbon, having preferably a boiling point above 100°C, a vegetable oil, such as corn oil, rapeseed oil, or a fatty acid ester, such as C1-C10-alkylester of a C10-C22-fatty acid, in particular methyl or ethyl esters of vegetable oils. such as rapeseed oil methyl ester or corn oil methyl ester. In a particular embodiment, the core material does not contain an oil as defined herein or less than 10% by weight, based on the weight of the core material, of an oil. In particular, the core does not contain an oil.

In addition to the solid fluopyram, the core material of the microparticles may further contain a further pesticide compound, in particular a fungicide compound, a herbicide or insecticide, having preferably a reduced water solubility, which generally does not exceed 10 g/l, in particular 5 g/l or even 1 g/l at 25°C (deionized water). In particular, solid fluopyram makes up at least 80%, in particular at least 90% of the pesticides contained in the microparticles.

The microparticles of the present invention are discrete particles having usually a particle size of less than 50 µm. Preferably, the particle size of the microparticles, i.e. their diameter, will in general not exceed 40 µm, preferably not exceed 35 µm and in particular not exceed 30 µm. The particle size given is the so called d90-value, which has to be understood as the value that is not exceeded by the diameters of at least 90% by weight of the microparticles. The microparticles have an average particle diameter, herein also termed d50-value, ranging from 1 to 25 µm, in particular from 1.5 to 20 µm, especially from 2 to 15 µm. The d50-value is defined as the value that is above the diameters of 50% by weight of the particles and below the diameters of 50% by weight of the particles. The d90 value as well as the d50 value can be calculated from the particle size distribution of the microparticles. Generally, the d10-value of the particles, i.e. the value of diameters which at least 10% by weight of the microparticles exceed, will be at least 0.5 µm and may e.g. be in the range from 0.5 µm 10 µm, in particular from 1 to 8 µm. The particle size distribution of the microparticles (i.e. the diameters) can be determined by conventional methods such as dynamic or static light scattering of an aqueous dispersion of the microparticle composition, e.g. at 25°C and a concentration in the range of 0.1 to 1% by weight.

In a preferred embodiment of the invention, the microparticle compositions according to the invention contains at least one anionic polymeric surface-active substance A, hereinafter also referred to as anionic polymeric surfactant A, which contains a plurality of anionic groups per molecule, such as carboxylate groups, sulfonate groups, phosphonate groups, sulfate groups and/or phosphate groups.

Preferably, the anionic groups are selected from sulfonate groups. Examples for polymeric surfactants A include the surfactants of the following groups A.1 to A.3, including the salts thereof:
A.1 lignin based sulfonic acids, such as lignosulfonic acid, ethoxylated lignosulfonic acid or oxidized lignins;
A.2 arylsulfonic acid formaldehyde condensates and arylsulfonic acid formaldehyde urea condensates, such as naphthalene sulfonic acid formaldehyde condensates, phenol sulfonic acid formaldehyde condensates, cresol sulfonic acid formaldehyde condensates etc.;
A.3 and homo- or copolymers of monoethylenically unsaturated monomers M1 having a sulfonic acid group optionally with one or more comonomers M2 different from monomers M1.

The anionic groups in these anionic polymeric surfactants may be partially or fully neutralized. Suitable counter ions are alkali metal ions, such as sodium, potassium, earth alkaline ions such as magnesium or calcium, and ammonium. In case of anionic polymeric surfactants having a sulfonate group, the anionic groups are preferably at least partly neutralized.

The polymeric surfactants are in one embodiment selected from groups A.2 and A.3, especially from group A.3.
In one embodiment, the polymeric surfactant A.3 is selected from homo- and copolymers made of
i) at least one monoethylenically unsaturated monomer M1 having a sulfonic acid group, such as vinylsulfonic acid, allylsulfonic acid, styrene sulfonic acid, vinyltoluene sulfonic acid, (meth)acrylate monomers having a sulfonic acid group, such as 2-acryloxyethylsulfonic acid, 2-acryloxypropylsulfonic or 4-acryloxybutylsulfonic acid, and (meth)acrylamide monomer having a sulfonic acid group, such as 2-acrylamidoethylsulfonic acid, 2-acrylamidopropylsulfonic acid or 2-acrylamido-2-methylpropane sulfonic acid
ii) and optionally one or more monoethylenically unsaturated comonomers M2 different from monomers M1, such as styrene, C1-C4-alkylacrylates, C1-C4-alkylmethacrylates, acrylamide, methacrylamide, acrylic acid, methacrylic acid, C1-C4-alkylacrylates, C1-C4-alkylmethacrylates.

In particular groups of embodiments, the polymeric surfactant A comprises or is selected from homo- and copolymers of group A.3, in particular from homo- and copolymers made of
i) monomers M1, which are selected from (meth)acrylate monomers having a sulfonic acid group, such as 2-acryloxyethylsulfonic acid, 2-acryloxypropylsulfonic or 4-acryloxybutylsulfonic acid, and (meth)acrylamide monomer having a sulfonic acid group, such as 2-acrylamidoethylsulfonic acid, 2-acrylamidopropylsulfonic acid or 2-acrylamido-2-methylpropane sulfonic acid,
ii) and optionally one or more monoethylenically unsaturated comonomers M2 different from monomers M1, such as styrene, C1-C4-alkylacrylates, C1-C4- alkylmethacrylates, acrylamide, methacrylamide, acrylic acid, methacrylic acid, C1-C4-alkylacrylates, C1-C4-alkylmethacrylates. Especially, the polymeric surfactant A.3 comprises or is selected from homo- and copolymers of
   i) monomers M1, which is 2-acrylamido-2-methylpropane sulfonic acid,
   ii) and optionally one or more monoethylenically unsaturated comonomers M2 different from monomers M1, such as styrene, C1-C4-alkylacrylates, C1-C4-alkylmethacrylates, acrylamide, methacrylamide, acrylic acid, methacrylic acid, C1-C4-alkylacrylates, C1-C4-alkylmethacrylates.

In these preferred, particular preferred or especially preferred polymeric surfactants A.3, the amount of monomers M1 is preferably at least 50% by weight, based on the total amount of monomers forming the polymeric surfactant. Even more preferred are polymeric surfactants A, which are homo- or copolymers of monomers M1, wherein the amount of monomers M1 is at least 90% by weight, based on the total amount of monomers forming the polymeric surfactant. These polymers are known, e.g. from commercially available under the tradenames Lupasol S and Lupasol PA 140.

In another group of embodiments, the polymeric surfactant A comprises or is selected from surfactants of group A.2, i.e. arylsulfonic acid formaldehyde condensates and arylsulfonic acid formaldehyde urea condensates, in particular from naphthalene sulfonic acid formaldehyde condensates.

In one embodiment, said at least one anionic polymeric surface-active substance A is from group A.1 and is a lignin based sulfonic acid, wherein said lignosulfonic acid has an average molar weight MW of at least 10,000 Da and has a degree of sulfonation from 1.0 to 2.5 mol per kilogram of said lignosulfonic acid.

The average molar weight MW of said lignin based sulfonic acid as applied herein is determined by gel permeation chromatography according to DIN 55672-3.

The degree of sulfonation said lignin based sulfonic acid as applied herein is calculated from the sulfur content of said lignin based sulfonic acid as determined by atomic emission spectroscopy, from which the content of sulfate (determined according to DIN 38405-D5-2) is being subtracted.

Preferred lignin based sulfonic acids, are lignosulfonic acid, ethoxylated lignosulfonic acid or oxidized lignins,

In one embodiment, the microparticle compositions according to the invention contain at least one anionic polymeric surface-active substance A.1 in combination with at least one anionic polymeric surface-active substance A.3.
In one embodiment the microparticle compositions according to the invention contains at least one anionic polymeric surface-active substance A.1 in combination with at least one anionic polymeric surface-active substance A.2.

In one preferred embodiment, said at least one anionic polymeric surface-active substance A comprises a combination of at least one anionic polymeric surface-active substance A.1, at least one anionic polymeric surface-active substance A.2 and at least one anionic polymeric surface-active substance A3.

The amount of the anionic polymeric surfactant A in the composition is preferably from 0.1 to 50% by weight, in particular from 2 to 40% by weight and most preferred from 3 to 30% by weight, based on the total amount of fluopyram and aminoplast polymer.

It is possible that compositions of the invention comprise in addition to polymeric surfactant A one or more further anionic surfactants B different therefrom, which provide for the stabilization of an aqueous formulation comprising the microparticles. Suitable anionic surface-active compounds B are surfactants having one anionic group, which is selected from phosphate or phosphonate groups and sulfate or sulfonate groups, the latter compounds being preferred. These surfactants B will usually be included into the microparticle composition in the form of their salts, in particular the sodium, potassium or ammonium salts. Examples of anionic surfactants B include the salts of alkyl sulfonates, alkyl sulfates, alkyl phosphates, semi-esters of alkoxylated alkanols with sulfuric acid or phosphoric acid, alkylarylsulfonates, alkylaryl phosphates, semi-esters of alkoxylated alkylphenols with sulfuric acid or phosphoric acid and semi-esters of alkoxylated mono-, di- or tristyrylphenols with sulfuric acid or phosphoric acid. Amongst these anionic surfactants B, those of the formula (I) are preferred:

R-(O-A)m-O-X (I)

wherein
R is a hydrocarbon radical having from 8 to 40 carbon atoms and preferably from 12 to 30 carbon atoms and optionally one oxygen atom;
A is independently from one another 1,2-ethylene, 1,2-propylene or 1,3-propylene, especially 1,2-ethylene;
m is from 0 to 50, preferably from 0 to 30 and especially preferred from 0 to 20; and
X is SO₃M or PO₃M₂ with M being selected from H, alkaline metal ions, such as K and Na, alkaline earth metal ions, such as ½ Ca and ½ Mg and ammonium.
Preferably, M is an alkaline metal ion and especially sodium.

Examples of suitable hydrocarbon radicals R having from 8 to 40 carbon atoms are alkyl having from 8 to 40 and preferably from 12 to 30 carbon atoms, phenyl, which may be substituted with one or two alkyl radicals having from 4 to 20 carbon atoms, phenyl, which is substituted with a phenoxy radical, wherein phenyl and/or phenoxy may contain an alkyl radical having from 4 to 20 carbon atoms, tristyrylphenyl radical etc. In a preferred embodiment of the present invention the radical R in formula I is a tristyrylphenyl radical.
Preference is given to anionic surfactants B which are of the formula (I), wherein R, m and X have the following meanings:
R is alkyl having from 8 to 30, in particular from 10 to 20 carbon atoms,
m is 0,
X is SO₃M with m being selected from alkaline metal ions, such as K and Na, alkaline earth metal ions, such as ½ Ca and ½ Mg and ammonium. Preferably, M is an alkaline metal and especially sodium.
In one embodiment, microparticles of the invention do not contain any alkyl sulfates or their salts, like sodium lauryl sulfate.
In one embodiment, microparticles of the invention do not contain any nonionic block copolymers or ethylene oxide and propylene oxide that do not bear any further functional groups.

If present, the amount of anionic surfactant B, in particular the surface-active compound of the formula (I), is preferably from 0.1 to 10% by weight, in particular from 0.3 to 7% by weight and most preferred from 0.5 to 5% by weight, based on the total amount of fluopyram and aminoplast polymer. If present, the amount of anionic surfactant B, in particular the surface-active compound of the formula (I), is preferably chosen such that the weight ratio of anionic polymeric surfactant A to anionic surfactant B is from 1:1 to 20:1 in particular from 2:1 to 10:1.

The compositions according to the invention may also contain a nonionic surface-active compound (nonionic surfactant). Examples of suitable nonionic surfactants include copolymers (especially graft or comb polymers) of alkyl(meth)acrylates and alkyleneoxides, (e.g. graft polymers of polyethylene glycol and poly methylmethacrylate). Further examples of nonionic surfactants include the neutral surface-active compounds of the formula (II),

R'-(O-B)ₙ-OH (II)

wherein
R' is a hydrocarbon radical having from 8 to 40 and more preferably from 12 to 30 carbon atoms and optionally one oxygen atom,
B is C₂-C₄-alkane-1,2-diyl, such as 1,2-ethylene, 1,2-propylene or 1,2-butylene or a combination thereof and more preferred 1,2-ethylene or a combination thereof with 1,2-propylene, and
n is from 3 to 100, preferably from 4 to 50 and more preferred from 5 to 40.
Preferred nonionic surfactants include block copolymers of ethylene oxide (EO) and propylene oxide (PO). Such block copolymers can for example have the structure R-(EO)x-(PO)y-(EO)z, with R being H or a C₄ to C₃₀ alkyl rest and x, y, z independently being numbers from 2 to 100.

Examples of suitable hydrocarbon radials R' include the radicals mentioned for R. In a preferred embodiment of the invention the radical R' is a phenyl radical being substituted with one C4-C18-alkyl group.
If present, the amount of nonionic surfactant, in particular the surface-active compound of the formula (II), is preferably from 1 to 150 g/L, in particular from 2 to 60 g/L in the final formulation. In one particular embodiment of the invention, the composition does not contain nonionic surfactant or less than 1% by weight of nonionic surfactant, in particular less than 0.5% by weight of nonionic surfactant, based on the total amount of fluopyram and aminoplast polymer.

In one preferred embodiment, compositions of the invention comprise at least one anionic polymeric surface-active substance A.1 and an acrylic polymer (polymer comprising ethylenically unsaturated monomers containing carboxylic acid groups or their salts or esters). Preferred acrylic polymers in this context are copolymers (especially graft or comb polymers) of alkyl(meth)acrylates and alkyleneoxides, (e.g. graft polymers of polyethylene glycol and poly methylmethacrylate).

In one preferred embodiment, compositions of the invention comprise at least one anionic polymeric surface-active substance A.2 and an acrylic polymer (polymer comprising ethylenically unsaturated monomers containing carboxylic acid groups or their salts or esters). Preferred acrylic polymers in this context are copolymers (especially graft or comb polymers) of alkyl(meth)acrylates and alkyleneoxides, (e.g. graft polymers of polyethylene glycol and poly methylmethacrylate).

In one preferred embodiment, compositions of the invention comprise at least one anionic polymeric surface-active substance A.3 and an acrylic polymer (polymer comprising ethylenically unsaturated monomers containing carboxylic acid groups or their salts or esters). Preferred acrylic polymers in this context are copolymers (especially graft or comb polymers) of alkyl(meth)acrylates and alkyleneoxides, (e.g. graft polymers of polyethylene glycol and poly methylmethacrylate).

In particular groups of embodiments, the microparticle composition is in the form of an aqueous suspension. Such a suspension contains the microparticles of solid fluopyram as a disperse phase, and an aqueous medium as the continuous phase.
The aqueous suspension may be obtained by the process for preparing the microparticle composition as described herein. It may also be obtained by re-dispersing a solid microparticle composition as described herein in an aqueous medium.

The term "aqueous medium" stands for the liquid phase of the composition and comprises an aqueous solvent and optionally compounds dissolved therein, e.g. surfactants as mentioned above, and if present, conventional one or more conventional formulation additives, such as thickeners or biocides. The aqueous solvent of the aqueous suspension is either water or a mixture thereof with a water-miscible organic solvent, such as C1-C4-alkanols, e.g. methanol, ethanol, n-propanol, isopropanol, n-butanol, 2-butanol, isobutanol, or tert. butanol, C2-C5-alkanediols and C3-C8- alkanetriols, preferably from the group consisting of ethylene glycol, 1,2-propanediol, 1,3-propanediol, glycerol and 1,4-butanediol. Generally, the amount of water in the aqueous solvent is at least 50% by weight, in particular at least 80% by weight or at least 90 % by weight, based on the aqueous solvent. The aqueous solvent may consist mainly of water, i.e. water makes up at least 95% by weight of the total amount of solvent present in the suspension. The aqueous solvent may also be a mixture of the aforementioned water-miscible organic solvent and water. In the latter case, the weight ratio of water to water-miscible organic solvent in the aqueous solvent preferably is in the range of from 99:1 to 1:1; more preferably in the range of from 50:1 to 3:1; and most preferably in the range of from 20:1 to 4:1. Expressed differently the amount of organic solvent may be from 1 to 50% by weight, more preferably from 2 to 25% by weight, and most preferably from 5 to 20% by weight, based on the total weight of the aqueous solvent.

The aqueous suspension will usually contain the microparticles in an amount of at least 5% by weight and the amount may be as high as 50% by weight or even higher, in each case based on the total weight of the aqueous suspension and calculated as the total amount of aminoplast-polymer and fluopyram. Frequently, the aqueous suspension will contain the microparticles in an amount from 10 to 48% by weight, in particular from 20 to 45% by weight, in each case based on the total weight of the aqueous suspension and calculated as the total amount of aminoplast-polymer and fluopyram. The concentration of fluopyram in the aqueous suspension will frequently be in the range from 5 to 40% by weight, in particular from 15 to 35% by weight, based on the total weight of the aqueous suspension.

If present, the concentration of the polymeric anionic surfactant A in the aqueous suspension will frequently be in the range from 0.1 to 15% by weight, in particular from 0.2 to 6% by weight, based on the total weight of the aqueous suspension of the microparticles.

If present, the concentration of the anionic surfactant B in the aqueous suspension will frequently be in the range from 0.1 to 15% by weight, in particular from 0.2 to 6% by weight, based on the total weight of the aqueous suspension of the microparticles.

The aqueous compositions according to the invention may also comprise customary formulation auxiliaries, such as viscosity-modifying additives (thickeners), antifoam agents, preservatives, buffers, inorganic dispersants, etc., which are usually employed in aqueous formulations of fungicides. Such auxiliaries may be incorporated into the aqueous suspension after step iii) of the preparation process described herein has been carried out. The amount of additives will generally not exceed 10% by weight, in particular 5% by weight of the total weight of the aqueous suspension. Suitable inorganic dispersants, also termed anticaking agents, for preventing agglutination of the microparticles, are silica (such as, for example Sipernat^{®} 22 from Degussa), alumina, calcium carbonate and the like. In the context of the present invention silica is a preferred inorganic dispersant. The concentration of inorganic dispersants in the final suspension will generally not exceed 2% by weight, based on the total weight of the final suspension, and, if present, it is preferably in the range from 0.01 to 2% by weight, in particular from 0.02 to 1.5% by weight and especially from 0.1 to 1% by weight, based on the total weight of the final formulation.

Suitable thickeners are compounds which affect the flow behavior of the suspension concentrate and may assist in stabilizing the aqueous suspension of the microparticles against caking. Mention may be made, in this connection, for example, of commercial thickeners based on polysaccharides, such as methylcellulose, carboxymethylcellulose, hydroxypropyl cellulose (Klucel^{®} grades), Xanthan Gum (commercially available e.g. as Kelzan^{®} grades from Kelco or Rhodopol^{®} grades from Rhodia), synthetic polymers, such as acrylic acid polymers (Carbopol^{®} grades), polyvinyl alcohol (e.g. Mowiol^{®} and Poval^{®} grades from Kuraray) or polyvinyl pyrrolones, silicic acid or phyllosilicates, such as montmorillonite and bentonites, which may be hydrophobized, (commercially available as Attaclay^{®} grades and Attaflow^{®} grades from BASF SE; or as Veegum^{®} grades and Van Gel^{®} grades from R.T. Vanderbilt). In the context of the present invention, Xanthan Gum is a preferred thickener. The concentration of thickeners in the aqueous suspension will generally not exceed 2% by weight, based on the total weight of the aqueous suspension, and is preferably in the range from 0.01 to 2% by weight, in particular from 0.02 to 1.5% by weight and especially from 0.1 to 1% by weight, based on the total weight of the aqueous suspension or the final formulation, respectively.

Antifoam agents suitable for the compositions according to the invention are, for example, silicone emulsions (such as, for example, Silicone SRE-PFL from Wacker or Rhodorsil^{®} from Bluestar Silicones), polysiloxanes and modified polysiloxanes including polysiloxane blockpolymers such as FoamStar^{®} SI and FoamStar^{®} ST products of BASF SE, long-chain alcohols, fatty acids, organofluorine compounds and mixtures thereof.

Suitable preservatives to prevent microbial spoiling of the compositions of the invention include formaldehyde, alkyl esters of p-hydroxybenzoic acid, sodium benzoate, 2-bromo-2-nitropropane-1,3-diol, o-phenylphenol, thiazolinones, such as benzisothiazolinone, 5-chloro-2-methyl-4-isothiazolinone, pentachlorophenol, 2,4-dichlorobenzyl alcohol and mixtures thereof. Commercially available preservatives that are based on isothiazolinones are for example marketed under the trademarks Proxel^{®} (Arch Chemical), Acticide^{®} MBS (Thor Chemie) and Kathon^{®} MK (Rohm & Haas).
If appropriate, the compositions according to the invention, in particular the aqueous suspensions, may comprise buffers to regulate the pH. Examples of buffers are alkali metal salts of weak inorganic or organic acids such as, for example, phosphoric acid, boric acid, acetic acid, propionic acid, citric acid, fumaric acid, tartaric acid, oxalic acid and succinic acid.

In addition, the compositions according to the invention, in particular the aqueous suspensions, can be formulated with conventional binders, for example aqueous polymer dispersions, water-soluble resins, for example water-soluble alkyd resins, or waxes.

The compositions of the invention may also contain one or more adjuvants. Suitable adjuvants are known to skilled persons and include surfactants, crop oil concentrates, spreader-stickers, wetting agents, and penetrants. In other particular groups of embodiments, the microparticle composition is in the form of solid composition. Such a solid composition contains the microparticles of solid fluopyram, optionally one or more surfactants, in particular the polymeric surfactant A and optionally the anionic surfactant B, and optionally an inert solid carrier material. The solid compositions may e.g. be redispersible powders, water-dispersible granules wettable powders and the like.

Solid carriers include e.g. mineral earths, such as silicas, silica gels, silicates, talc, kaolin, lime stone, lime, chalk, bole, loess, clay, dolomite, diatomaceous earth, calcium sulfate, magnesium sulfate, magnesium oxide, ground synthetic materials, fertilizers such as ammonium sulfate, ammonium phosphate, ammonium nitrate, ureas, and products of vegetable origin, such as cereal meal, tree bark meal, wood meal and nutshell meal, cellulose powders, or other solid carriers. The solid compositions according to the invention may also comprise customary formulation auxiliaries, such as antifoam agents, preservatives, buffers, inorganic dispersants, etc., which are usually employed in solid formulations of fungicides. Such auxiliaries may be incorporated into the solid formulation at any conventional stage of their preparation process. The amount of additives will generally not exceed 10% by weight, in particular 5% by weight of the total weight of the solid composition.

Another embodiment of the invention is a method for producing the composition of containing fluopyram containing microparticles as described above which comprises the following steps:
i) providing an aqueous suspension or dispersion of solid fluopyram particles;
ii) adding an aminoplast pre-condensate to the aqueous suspension;
iii) effecting the polycondensation of the aminoplast pre-condensate.

Preferably, the fluopyram particles in the aqueous suspension dispersion have a weight average particle diameter d50 in the range from 0.5 to 25 µm, preferably 0.5 to 15 µm, as determined by dynamic light scattering.

The solid composition may be obtained from an aqueous suspension which is primarily formed in the process for preparing the microparticle composition as described herein by removing the aqueous phase from the aqueous suspension. Removal of the aqueous phase can be achieved by either separating the aqueous phase from the solid microparticles, e.g. by centrifugation or filtration. Preferably, the aqueous phase is removed by an evaporation process, such as spray drying or freeze drying.

As outlined above, the process for producing the composition comprises a first step (step i)), where an aqueous suspension of fluopyram particles is provided. For this, solid fluopyram is suspended in an aqueous solvent, in particular in water. The aqueous solvent may contain one or more surfactants, in particular at least one polymeric surfactant A, which is assumed to act as a protective colloid, and optionally one or more anionic surfactants B and/or nonionic surfactants.

Typically, to provide the aqueous suspension of fluopyram particles having the desired particle size, an aqueous suspension of fluopyram is milled in the presence of one or more surfactants. This mixture of fluopyram particles suspended in water in the presence of suitable surfactants is referred to as the "millbase". The choice of the surfactants present in the fluopyram millbase is crucial for obtaining a homogenous and processable aqueous fluopyram suspension.
In one embodiment the millbase contains less than 1wt% of alkyl sulfates or their salts (e.g. sodium lauryl sulfate) based on the content of fluopyram. In one embodiment, the millbase is free from alkyl sulfates or their salts.
In one embodiment the millbase contains less than 1wt% of nonionic block copolymer of ethylene oxide and propylene oxide that are not further functionalized based on the content of fluopyram. In one embodiment, the millbase is free from such EO/PO block copolymers.

Preferably, the millbase comprises at least one anionic surfactant.

In a preferred embodiment of the invention, the millbase contains at least one anionic polymeric surface-active substance A, as defined above, which contains a plurality of anionic groups per molecule, such as carboxylate groups, sulfonate groups, phosphonate groups, sulfate groups and/or phosphate groups.

Preferably, the anionic groups are selected from sulfonate groups. Examples for polymeric surfactants A include the surfactants of the following groups A1 to A3, as defined above, including the salts thereof:
In one embodiment, the millbase comprises at least one anionic surfactant A.1, A.2 and/or A.3.
In one embodiment, the millbase comprises at least one anionic surfactant A.1.
In one embodiment, the millbase comprises at least one anionic surfactant A.2.
In one embodiment, the millbase comprises at least one anionic surfactant A.3.

In one preferred embodiment, the millbase comprises a combination of an acrylic copolymer (polymer comprising ethylenically unsaturated monomers containing carboxylic acid groups or their salts or esters like acrylic acid, methacrylic esters, acrylic esters or methacrylic esters) and at least one anionic polymeric surface-active substance A.1.
In one preferred embodiment, the millbase comprises a combination of an acrylic copolymer and at least one anionic polymeric surface-active substance A.2.
In one preferred embodiment, the millbase comprises a combination of an acrylic copolymer and at least one anionic polymeric surface-active substance A.3.

Preferred acrylic polymers in this context are copolymers containing alkyl(meth)acrylates). Especially preferred are graft or comb polymers of alkyl(meth)acrylates and alkyleneoxides, (e.g.
graft polymers of polyethylene glycol and poly methylmethacrylate)
In one embodiment, the millbase comprises, in addition to the one or more anionic surfactants, at least one nonionic surfactants, e.g. graft polymers of polyethylene glycol and poly methylmethacrylate.

In one preferred embodiment, the millbase comprises a combination of a graft or comb polymer of alkyl(meth)acrylates and alkyleneoxides, (e.g. graft polymers of polyethylene glycol and poly methylmethacrylate) and at least one anionic polymeric surface-active substance A.1.
In one preferred embodiment, the millbase comprises a combination of a graft or comb polymer of alkyl(meth)acrylates and alkyleneoxides, (e.g. graft polymers of polyethylene glycol and poly methylmethacrylate) and at least one anionic polymeric surface-active substance A.2.
In one preferred embodiment, the millbase comprises a combination of a graft or comb polymer of alkyl(meth)acrylates and alkyleneoxides, (e.g. graft polymers of polyethylene glycol and poly methylmethacrylate) and at least one anionic polymeric surface-active substance A.3.

Preferably, the particle size of the fluopyram particles in the aqueous suspension prior to encapsulation is less than 45 µm, in particular it will not exceed 40 µm, preferably not exceed 30 µm and in particular not exceed 25 µm. The particle size given is the so called d90-value. Preferably the active substance particles have an average particle diameter, herein also termed d50-value, ranging from 0.5 to 25 µm, in particular from 1 to 20 µm, especially from 1.5 to 15 µm. The d50-value is defined as the value that is above the diameters of 50% by weight of the particles and below the diameters of 50% by weight of the particles. The d10-value is preferably at least 0.5 µm and may e.g. be in the range from 0.5 µm 10 µm, in particular from 1 to 5 µm. The d90 value as well as the d50 value can be calculated from the particle size distribution of the fluopyram particles which can be determined by conventional methods such as dynamic or static light-scattering at 25°C and a concentration in the range of 0.1 to 1% by weight.

It has been found beneficial, if the polycondensation is initiated or effected in the presence of at least one anionic polymeric surfactant A, in particular an anionic polymeric surfactant A which comprises or is selected from the polymeric surfactants of group A.3. If present, the concentration of the polymeric anionic surfactant A, which is in particular selected from the surfactants of group A.3, in the aqueous suspension of step i) will frequently be in the range from 0.1 to 10% by weight, in particular from 1 to 6% by weight, based on the total weight of the aqueous suspension.

In one embodiment, the aqueous suspension of step i) also contains at least one anionic surfactant B, in particular an anionic surfactant which comprises or is selected from the surfactants of the formula (I). If present, the concentration of the anionic surfactant B in the aqueous suspension of step i) will frequently be in the range from 0.01 to 2% by weight, in particular from 0.1 to 1% by weight, based on the total weight of the aqueous suspension.

In one embodiment, step i) comprises a step i.a) and a step i.b). In step i.a) solid fluopyram, in particular a crystalline form of fluopyram, and the aqueous solvent and optionally at least a part of the surfactant are mixed in any conventional mixing device which is capable of providing sufficient shear to form the desired suspension. Suitable mixing devices include in particular high shear mixers, such as Ultra-Turrax apparatus, static mixers, e.g. systems having mixing nozzles, agitator bead mills, colloid mills, cone mills and other homogenizers. In general, the sequence in which the individual components are combined is not critical. It may be advantageous to carry step i.a) out by firstly mixing the aqueous solvent and at least a part of the surfactant, e.g. the surfactant of group A and optionally the surfactant B, until a homogenous mixture is obtained, and then adding the solid fluopyram with shear to said homogenous mixture. The mixture obtained from step i.a) (the "millbase" with preferred components as described above), i.e. a coarse suspension of fluopyram in the aqueous solvent, is then subjected in step i.b) to suitable means for reducing the particle size of the fluopyram particles present in the mixture typically to below 40 µm, preferably to below 30 µm and in particular to below 20 µm (d90-value), e.g. to a particle size (d90) in the range from 0.5 to 15 µm. Step i.b) may be carried out by any physical attrition method, such as grinding, crushing or milling, in particular by wet grinding or wet milling, including e.g. bead milling, hammer milling, jet milling, air classifying milling, pin milling, cryogenic grinding processes and the like. Steps i.a) and i.b) are usually performed subsequently. However, it is also possible to perform these steps together.

In one preferred embodiment, solid fluopyram is milled in the presence of a naphthalene sulfonate condensate and poly methylmethacrylate-polyethylene glycol graft copolymer.

In another embodiment of the invention, step i) comprises providing fluopyram in the form of a powder, wherein the d90 value of the powder particles is below 40 µm and in particular at most 30 µm or at most 20 µm, e.g. the particle size (d90) is in the range from 1 to < 40 µm, in particular 1 to 30 µm or 1 to 20 µm. The powder is usually prepared by comminuting the solid fluopyram, e.g. the anhydrate or the crystalline hydrate, by a conventional dry milling technique, such as air milling, to a powder having the desired particle size. The thus obtained powder is then be suspended in the aqueous solvent or in an aqueous solution of the surfactant of group A and optionally the surfactant B.

It may be beneficial to add the polymeric surfactant A to the suspension of the fluopyram provided in step i) before starting or initiating or effecting the polycondensation, in particular before adding the aminoplast pre-condensate thereto. In particular, it may be beneficial to keep the aqueous suspension of fluopyram, which contains the polymeric surfactant A, for some time, e.g. for 10 to 180 minutes, before starting the polycondensation. It may be beneficial to add the polymeric surfactant A to the suspension after having performed step i).
In one embodiment, polymeric surfactants A (such as A1, A,2 and/or A.3) are added to the suspension of the fluopyram provided in step i) before starting or initiating or effecting the polycondensation, in particular before adding the aminoplast pre-condensate thereto. In particular, it may be beneficial to keep the aqueous suspension of fluopyram, which contains the polymeric surfactant A2, for some time, e.g. for 10 to 180 minutes, before starting the polycondensation, while polymeric surfactant A1 is only added after step i).

In step ii), an aminoplast pre-condensate is added to the aqueous suspension of step i), which, upon curing in step iii), forms the solid, water-insoluble aminoplast polymer, which embeds or surrounds the solid fluopyram particles, because the polycondensation preferentially occurs on the surface of the solid fluopyram particles.

The amount of aminoplast pre-condensate added in step ii) is chosen such that the desired amount of aminoplast polymer in the final microparticle composition is achieved. In fact, the amount added corresponds to the amount of aminoplast resin in the microparticles, taking into account that the mass is reduced by the amount of water which is formed during the polycondensation, and is usually in the range 0.5 to 40% by weight, in particular from 1 to 35% by weight, based on fluopyram and calculated as organic matter.

It was surprisingly found that the halo effect of formulations of the invention is improved when the amount of aminoplast polymer material in the formulation is 10 wt% of higher, preferably 15 wt of higher based on the total amount of fluopyram and aminoplast polymers present in the formulation. Thus, in one preferred embodiment, the amount of aminoplast polymer material in the formulation ins from 15 to 40 wt%, more preferably 18 to 38, or 20 to 35 wt%, in each case based on the total amount of fluopyram and aminoplast polymers present in the formulation.

Suitable pre-condensates, which can be added in step ii) include pre-condensates of melamine and formaldehyde, including wholly or partially etherified melamine formaldehyde pre-condensates, urea-formaldehyde pre-condensates, thiourea formaldehyde pre-condensates, pre-condensates of melamine, urea and formaldehyde (MUF resins), including mixtures of wholly or partially etherified melamine formaldehyde pre-condensates and urea-formaldehyde pre-condensates, precondensates of urea and glutaraldehyde, pre-condensates of benzoguanamine and formaldehyde, mixtures of dicyandiamide and formaldehyde and urea-glyoxal polycondensates. Suitable aminoplast pre-condensates for microencapsulation are known and can be found, inter alia, in Kirk-Othmer, Encyclopedia of Chemical Technology, 3rd edition, Vol. 2, pp. 440-469, the prior art cited in the introductory part, US 4,918,317, EP 26914, EP 218887, EP 319337, EP 383,337, EP 415273, DE 19833347, DE 19835114 and WO 01/51197. Suitable pre-condensates are commercially available, e. g. Cymel types, such as but not limited to Cymel^{®} 303, 327, 328 or 385 (etherified melamine formaldehyde resins of Cytec), Maprenal^{®} types, such as but not limited to Maprenal^{®} MF 900w/95, MF 915/75IB, MF 920/75WA, MF

921w/85WA, (etherified melamine formaldehyde resins of Ineos), Kauramin^{®} types of BASF SE, such as but not limited to Kauramin^{®} 783, Kauramin^{®} 792 or Kauramin^{®} 753 (melamine formaldehyde resins), Kauramin^{®} 620 or Kauramin^{®} 621 (melamine urea formaldehyde resins), Kaurit^{®} types of BASF SE, such as but not limited to Kaurit^{®} M70, 210, 216, 217 or 220 (urea formaldehyde resins), Luracoll^{®} types such as Luracoll^{®} SD (etherified melamine formaldehyde resins), Luwipal^{®} types such as but not limited to Luwipal^{®} 063, Luwipal^{®} 069 (etherified melamine formaldehyde resins), or Plastopal^{®} types such as but not limited to Plastopal^{®} BTM, Plastopal^{®} BTW (etherified urea formaldehyde resins).

In suitable urea-formaldehyde or thiourea-formaldehyde pre-condensates, the molar ratios of urea or thiourea to formaldehyde are generally in the range from 1:0.8 to 1:4, in particular from 1:1.5 to 1:4, especially from 1:2 to 1:3.5.

In suitable melamine-formaldehyde or melamine-(thio)urea-formaldehyde pre condensates, the molar ratios of melamine to formaldehyde are generally in the range from 1:1.5 to 1:10, in particular from 1:3 to 1:8 preferably 1:4 to 1:6.

In suitable melamine-formaldehyde or melamine-(thio)urea-formaldehyde precondensates, the molar ratios of melamine + urea or thiourea to formaldehyde are generally in the range from 1:0.8 to 1:9, in particular from 1:2 to 1:8 preferably 1:3 to 1:6. The molar ratio of urea or thiourea to melamine is usually in the range from 5:1 to 1:50 and in particular from 30:1 to 1:30.
The pre-condensates may be used in the form of etherified pre-condensates of amino compound and aldehyde. In these etherified pre-condensates the methylol groups formed by the reaction of the amino groups with formaldehyde with an alkanol or an alkandiol, in particular with a C1-C4-alkanol, such as methanol, ethanol, n-propanol or n-butanol, in particular methanol, or a C2-C4-alkandiol, such as ethylene glycol. The degree of etherification of these resins can be adjusted by the molar ratio of amino groups to alkanol which is typically in the range from 10:1 to 1:10, preferably in the range from 2:1 to 1:5.
The pre-condensates are most preferably selected from the group consisting of melamine-formaldehyde resins, including wholly or partially etherified melamine formaldehyde pre-condensates, and urea-formaldehyde pre-condensates and mixtures thereof. Especially, the pre-condensate is a wholly or partially etherified melamine formaldehyde condensate, which may contain small amounts, e.g. 1 to 20 mol.-%, based on melamine, of urea.
Addition of the pre-condensate to the aqueous suspension is normally achieved by adding the pre-condensate in the form of an aqueous or alcoholic solution of the precondensate to the aqueous suspension or by mixing suitable amounts of the dissolved pre-condensate. Preferably, suitable mixing devices, such as stirrers or inline-mixers are used in order to achieve a uniform distribution of the pre-condensate in the aqueous suspension. It may be beneficial to add the pre-condensate, preferably in the form of a solution, to the aqueous suspension of fluopyram with stirring. Preferably, the addition of the pre-condensate is performed under conditions, where the polycondensation reaction is slow or does not occur, e.g. where either the pH of the aqueous suspension at least pH 6, e.g. in the range form pH 6 to pH 10, or where the temperature does not exceed 30°C or both.

The polycondensation of the aminoplast pre-condensate can be effected or initiated in a well-known manner, e.g. by heating the aqueous suspension to a certain reaction temperature, at a pH, where the polycondensation at the reaction temperature occurs.
During the polycondensation, the aminoplast pre-condensate is converted into a water-insoluble aminoplast resin, which precipitates from the aqueous phase and deposits preferably on the surface of the solid fluopyram particles, thereby embedding or surrounding the solid fluopyram particles. Thereby, it is possible to a achieve an efficient encapsulation even with small amounts of the aminoplast pre-condensate. Preferably, the polycondensation of the aminoplast is performed at pH of less than pH 6, in particular at a pH of at most pH 5, e.g. in the range of pH 0 to 6, more particularly in the range from pH 1 to 5 or in the range from pH 2 to 4.
The pH of the aqueous suspension is usually adjusted by addition of suitable amounts of an organic or inorganic acid, such as sulfuric acid, hydrochloric acid, phosphoric acid, a carboxylic acid including alkanoic acids, alkandioic acids or hydroxycarboxylic acids, such as formic acid, acetic acid, propionic acid, oxalic acid, malic acid or citric acid, and alkyl or arylsulfonic acids, such as methane sulfonic acid or toluene sulfonic acid. It is preferred, if at least a portion, in particular the majority of the acid is present in the aqueous suspension, before the aqueous suspension is heated to the reaction temperature.

Preferably, the polycondensation of the aminoplast pre-condensate is performed at elevated temperature, in particular at a temperature of at least 30°C, in particular at least 40°C or at least 50°C, e.g. at a temperature in the range of 30 to 100°C, in particular in the range of 40 to 95°C or in the range of 50 to 90°C. It may be possible to effect the start of the polycondensation of the aminoplast at a comparatively low temperature, e.g. a temperature in the range of 30 to 65°C or 35 to 60°C and then complete the polycondensation reaction at a higher temperature of e.g. 50 to 100°C or 60 to 90°C. The time for completing the polycondensation may vary, depending on the reactivity of the pre-condensate, the temperature and the pH of the aqueous
suspension and may take from 1 h to 24 h, in particular from 2 to 12 h. Preferably, the polycondensation reaction is at least partly performed at temperatures of at least 50°C, in particular at least 55°C, e.g. for 1 to 8 h at a temperature in the range from 50 to 80°C, in particular 55o 70°C.

The thus obtained aqueous suspension of the fluopyram microparticles may be neutralized by the addition of a base. Preferably, the pH of the suspension is adjusted to a pH of at least 6, e.g. a pH in the range of pH 6 to 10, in particular in the range of pH 6.5 to 9.0. In one embodiment the base used is ammonia, especially aqueous ammonia. In one embodiment, a formaldehyde scavenger is added, e.g. ammonia, or another type of scavenger such as ethylene urea, sodium metabisulfite, gallic acid, acetyl acetamide, N-(2-Hydroxyethyl)ethylene urea.

From the thus obtained aqueous suspension the microparticles can be isolated, e.g. by filtration or centrifugation, or the aqueous suspension may be spray-dried, granulated or freeze-dried, to obtain a solid composition in the form of a powder or granules. The solid composition may be redispersed or formulated by using formulation auxiliaries as described above.
The aqueous suspension may also be used as such or formulated as a liquid formulation, e.g. as a suspension, by using suitable formulation auxiliaries as described above, e.g. such as thickeners, anionic surfactants B, non-ionic surfactants and/or biocides.

The invention also relates to uses of the microparticle composition of the invention for protecting crop plants and to methods of controlling fungi and nematodes which comprise applying the formulations, in diluted or undiluted form, to plants, their environment and/or seeds.
One embodiment is directed to seeds comprising microparticles of the invention or formulations of the invention.
The compositions of the invention provide for a very good control of fungi and nematodes in noncrop areas, especially at high application rates. However, generally no higher application rates are required in comparison with conventional formulations of non-encapsulated fluopyram for achieving similar control.

In crops such as corn, potatoes, peanuts, permanent crops, soybean, cotton, oilseed rape, flax, lentils, rice, sugar beet, sunflower, tobacco and cereals, such as, for example maize or wheat, the compositions of the invention are active against fungi and nematodes and provide for less damage to the crop plants in comparison with conventional formulations of non-encapsulated fluopyram. This effect is particularly observed at low application rates. Furthermore, the compositions of the invention provide for long lasting residual activity, which exceeds the residual activity of conventional formulations of non-encapsulated fluopyram.

The inventive compositions are particularly important in the control of a multitude of phytopathogenic fungi or nematodes on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (Table Agrapes and grape juice grape vines); hop; turf; sweet leaf (also called Stevia); natural rubber plants or ornamental and forestry plants, such as flowers, shrubs, broad-leaved trees or evergreens, e. g. conifers; and on the plant propagation material, such as seeds, and the crop material of these plants.

Preferred crops are Arachis hypogaea, Beta vulgaris spec. altissima, Brassica napus var. napus, Brassica oleracea, Citrus limon, Citrus sinensis, Coffea arabica (Coffea canephora, Coffea liberica), Cynodon dactylon, Glycine max, Gossypium hirsutum, (Gossypium arboreum, Gossypium herbaceum, Gossypium vitifolium), Helianthus annuus, Hordeum vulgare, Juglans regia, Lens culinaris, Linum usitatissimum, Lycopersicon lycopersicum, Malus spec., Medicago sativa, Nicotiana tabacum (N.rustica), Olea europaea, Oryza sativa , Phaseolus lunatus, Phaseolus vulgaris, Pistacia vera, Pisum sativum, Prunus dulcis, Saccharum officinarum, Secale cereale, Solanum tuberosum, Sorghum bicolor (s. vulgare), Triticale, Triticum aestivum, Triticum durum, Vicia faba, Vitis vinifera and Zea mays

Especially preferred crops are crops of cereals, corn, soybeans, rice, oilseed rape, cotton, potatoes, peanuts or permanent crops.

An especially preferred crop is soy.

Furthermore, the compositions of the invention can also be used in crops which tolerate attack by insects or fungi as the result of breeding, including genetic engineering methods.

In general, the compositions of the invention as described herein are useful for combating fungi and nematodes. For this purpose, the compositions may be applied as such or are preferably applied after dilution with water. In one embodiment for various purposes of end user application, a so-called aqueous spray-liquor is prepared by diluting the compositions of the present invention with water, e.g. tap water. The spray-liquors may also comprise further constituents in dissolved, emulsified or suspended form, for example fertilizers, active substances of other groups pesticidal active substances, further active substances, for example active substances for controlling animal pests or phytopathogenic fungi or bacteria, furthermore mineral salts which are employed for alleviating nutritional and trace element deficiencies, and nonphytotoxic oils or oil concentrates. As a rule, these constituents are added to the spray mixture before, during or after dilution of the compositions according to the invention.

Microparticles and formulations of the invention can be used for the purposes of **treatment of plant propagation materials,** particularly seeds. The compositions in question give, after two-to-tenfold dilution, active substance concentrations of from 0.01 to 60% by weight, preferably from 0.1 to 40% by weight, in the ready-to-use preparations. Application can be carried out before or during sowing. Methods for applying compound I and compositions thereof, respectively, on to plant propagation material, especially seeds include dressing, coating, pelleting, dusting, soaking and in-furrow application methods of the propagation material. Preferably, compound I or the compositions thereof, respectively, are applied on to the plant propagation material by a method such that germination is not induced, e. g. by seed dressing, pelleting, coating and dusting.

When employed in plant protection, the **amounts of active substances applied** are, depending on the kind of effect desired, from 0.001 to 2 kg per ha, preferably from 0.005 to 2 kg per ha, more preferably from 0.05 to 0.9 kg per ha, and in particular from 0.1 to 0.75 kg per ha.
In treatment of plant propagation materials such as seeds, e. g. by dusting, coating or drenching seed, amounts of active substance of from 0.1 to 1000 g, preferably from 1 to 1000 g, more preferably from 1 to 100 g and most preferably from 5 to 100 g, per 100 kilogram of plant propagation material (preferably seeds) are generally required. Especially for treating nematodes, compositions of the invention are typically employed such that 0.01 to 0.3 mg fluopyram per seed, especially 0.05 to 0.1 mg of fluopyram per seed are applied. Especially for treating sudden death syndrome (SDS) in soy, compositions of the invention are typically employed such that 0.05 to 0.5 mg fluopyram per seed, especially 0.1 to 0.3 mg of fluopyram per seed are applied.

When used in the protection of materials or stored products, the amount of active substance applied depends on the kind of application area and on the desired effect. Amounts customarily applied in the protection of materials are 0.001 g to 2 kg, preferably 0.005 g to 1 kg, of active substance per cubic meter of treated material.

Various types of oils, wetters, adjuvants, fertilizer, or micronutrients, and further pesticides (e.g. herbicides, insecticides, fungicides, growth regulators, safeners) may be added to the active substances or the compositions comprising them as premix or, if appropriate not until immediately prior to use (**tank mix**). These agents can be admixed with the compositions according to the invention in a weight ratio of 1:100 to 100:1, preferably 1:10 to 10:1.
The **user applies** the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

Depending on the aim of the control measures, the season, the target plants and the growth stage, the compositions of the invention are applied to such a degree that the application rates of fluopyram are from 0.001 to 3.0, preferably from 0.01 to 1.0 kg/ha active substance (a.s.).

To widen the spectrum of action and to obtain synergistic effects, the compositions of the invention can be mixed with a large number of representatives of other groups of fungicidal or insecticidal active substances and applied together with these.

Examples of suitable mixing partners are fungicides, insecticides or herbicides.
Suitable fungicides are, e.g., fungicides of the classes dinitroanilines, allylamines, anilinopyrimidines, antibiotics, aromatic hydrocarbons, benzenesulfonamides, benzimidazoles, benzisothiazoles, benzophenones, benzothiadiazoles, benzotriazines, benzyl carbamates, carbamates, carboxamides, carboxylic acid amides, chloronitriles, cyanoacetamide oximes, cyanoimidazoles, cyclopropanecarboxamides, dicarboximides, dihydrodioxazines, dinitrophenylcrotonates, dithiocarbamates, dithiolanes, ethylphosphonates, ethylaminothiazolecarboxamides, guanidines, hydroxy-(2-amino)pyrimidines, hydroxyanilides, imidazoles, imidazolinones, isobenzofuranones, methoxyacrylates, methoxycarbamates, morpholines, N-phenylcarbamates, oxazolidinediones, oximinoacetates, oximinoacetamides, peptidylpyrimidine nucleosides, phenylacetamides, phenylamides, phenylpyrroles, phenylureas, phosphonates, phosphorothiolates, phthalamic acids, phthalimides, piperazines, piperidines, propionamides, pyridazinones, pyridines, pyridinylmethylbenzamides, pyrimidinamines, pyrimidines, pyrimidinonehydrazones, pyrroloquinolinones, quinazolinones, quinolines, quinones, sulfamides, sulfamoyltriazoles, thiazolecarboxamides, thiocarbamates, thiophanates, thiophenecarboxamides, toluamides, triphenyltin compounds, triazines, triazoles.
Preferred fungicides are triazole fungicides, such as azaconazole, bitertanol, bromuconazole , cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole, 2 (2,4-difluorophenyl)-1,1-difluoro-3-(tetrazol-1-yl)-1-[5-[4-(2,2,2-trifluoroethoxy)phenyl]-2 pyridyl]propan-2-ol, 2-(2,4-difluorophenyl)-1,1-difluoro-3-(tetrazol-1-yl)-1-[5-[4-(trifluoromethoxy)phenyl]-2-pyridyl]propan-2-ol, 4-[[6-[2-(2,4-difluorophenyl)-1,1-difluoro-2-hydroxy-3-(5-sulfanyl-1,2,4-triazol-1-yl)propyl]-3-pyridyl]oxy]benzonitrile, ipfentrifluconazole, mefentrifluconazole, 2-(chloromethyl)-2-methyl-5-(p-tolylmethyl)-1-(1,2,4-triazol-1-ylmethyl)cyclopentanol; preferably epoxiconazole, metyltetraprole, mefentrifluconazole, prothioconazole; more preferably mefentrifluconazole.

Suitable insecticides are, e.g., insecticides from the class of carbamates, organophosphates, organochlorine insecticides, phenylpyrazoles, pyrethroids, neonicotinoids, spinosins, avermectins, milbemycins, juvenile hormone analogs, alkyl halides, organotin compounds, nereistoxin analogs, benzoylureas, diacylhydrazines, METI acaricides, and insecticides such as chloropicrin, pymetrozine, flonicamid, clofentezine, hexythiazox, etoxazole, diafenthiuron, propargite, tetradifon, chlorfenapyr, DNOC, buprofezin, cyromazine, amitraz, hydramethylnon, acequinocyl, fluacrypyrim, rotenone, or derivatives thereof.

Suitable herbicides are, e.g., herbicides of the classes of acetamides, amides, aryloxyphenoxypropionates, benzamides, benzofuran, benzoic acids, benzothiadiazinones, bipyridylium, carbamates, chloroacetamides, cyclohexanediones, dinitroanilines, dinitrophenol, diphenyl ethers, glycines, imidazolinones, isoxazoles, isoxazolidinones, nitriles, N-phenylphthalimides, oxadiazoles, oxazolidinediones, oxyacetamides, phenoxycarboxylic acids, phenylcarbamates, phenylpyrazoles, phenylpyrazolines, phenylpyridazines, phosphoroamidates, phosphorodithioates, phthalamates, pyrazoles, pyridazinones, pyridinecarboxamides, pyrimidinediones, pyrimidinyl(thio)benzoates, quinolinecarboxylic acids, semicarbazones, sulfonylaminocarbonyltriazolinones, sulfonylureas, tetrazolinones, thiadiazoles, thiocarbamates, triazines, triazinones, triazoles, triazolinones, triazolocarboxamides, triazolopyrimidines, triketones, uracils, ureas.

Suitable mixing partners in particular include:
A) Respiration inhibitors
   - Inhibitors of complex III at Qₒ site: azoxystrobin (A.1.1), coumethoxystrobin (A.1.2), coumoxystrobin (A.1.3), dimoxystrobin (A.1.4), enestroburin (A.1.5), fenaminstrobin (A.1.6), fenoxystrobin/flufenoxystrobin (A.1.7), fluoxastrobin (A.1.8), kresoxim-methyl (A.1.9), mandestrobin (A.1.10), metominostrobin (A.1.11), orysastrobin (A.1.12), picoxystrobin (A.1.13), pyraclostrobin (A.1.14), pyrametostrobin (A.1.15), pyraoxystrobin (A.1.16), trifloxystrobin (A.1.17), 2-(2-(3-(2,6-dichlorophenyl)-1-methyl-allylideneaminooxymethyl)-phenyl)-2-methoxyimino-*N*-methyl-acetamide (A.1.18), pyribencarb (A.1.19), triclopyricarb/chlorodincarb (A.1.20), famoxadone (A.1.21), fenamidone (A.1.21), methyl-*N*-[2-[(1,4-dimethyl-5-phenyl-pyrazol-3-yl)oxylmethyl]phenyl]-*N*-methoxy-carbamate (A.1.22), metyltetraprole (A.1.25), (*Z*,2*E*)-5-[1-(2,4-dichlorophenyl)pyrazol-3-yl]-oxy-2-methoxyimino-*N*,3-dimethyl-pent-3-enamide (A.1.34), (*Z*,2*E*)-5-[1-(4-chlorophenyl)pyrazol-3-yl]oxy-2-methoxyimino-*N*,3-dimethyl-pent-3-enamide (A.1.35), pyriminostrobin (A.1.36), bifujunzhi (A.1.37), 2-(ortho-((2,5-dimethylphenyl-oxymethylen)phenyl)-3-methoxy-acrylic acid methyl ester (A.1.38);
   - inhibitors of complex III at Qᵢ site: cyazofamid (A.2.1), amisulbrom (A.2.2), [(6*S*,7*R*,8*R*)-8-benzyl-3-[(3-hydroxy-4-methoxy-pyridine-2-carbonyl)amino]-6-methyl-4,9-dioxo-1,5-dioxonan-7-yl] 2-methylpropanoate (A.2.3), fenpicoxamid (A.2.4), florylpicoxamid (A.2.5), [(*1S*,2*S*)-2-(4-fluoro-2-methyl-phenyl)-1,3-dimethyl-butyl] (2*S*)-2-[(3-hydroxy-4-methoxy-pyridine-2-carbonyl)amino]propanoate, [(1*S*,2*S*)-2-(2,4-dimethylphenyl)-1,3-dimethyl-butyl](2*S*)-2-[(3-hydroxy-4-methoxy-pyridine-2-carbonyl)amino]propanoate, [(1*S*,2*S*)-2-(2,4-difluorophenyl)-1,3-dimethyl-butyl] (2*S*)-2-[(3-hydroxy-4-methoxy-pyridine-2-carbonyl)amino]propanoate, [(1*S*,2*S*)-2-(2-fluoro-4-methyl-phenyl)-1,3-dimethyl-butyl] (2*S*)-2-[(3-hydroxy-4-methoxy-pyridine-2-carbonyl)amino]propanoate, [(1*S*,2*S*)-2-(4-fluoro-2-methyl-phenyl)-1,3-dimethyl-butyl] (2*S*)-2-[(3-acetoxy-4-methoxy-pyridine-2-carbonyl)amino]-propanoate, [(1*S*,2*S*)-2-(2,4-dimethylphenyl)-1,3-dimethyl-butyl](2*S*)-2-[(3-acetoxy-4-methoxy-pyridine-2-carbonyl)amino]propanoate, [(1*S*,2*S*)-2-(2,4-difluorophenyl)-1,3-dimethyl-butyl](2*S*)-2-[(3-acetoxy-4-methoxy-pyridine-2-carbonyl)amino]propanoate, [(1*S*,2*S*)-2-(2-fluoro-4-methylphenyl)-1,3-dimethyl-butyl](2*S*)-2-[(3-acetoxy-4-methoxy-pyridine-2-carbonyl)amino]propanoate, [2-[[(1*S*)-2-[(1*S*,2*S*)-2-(4-fluoro-2-methyl-phenyl)-1,3-dimethyl-butoxy]-1-methyl-2-oxo-ethyl]carbamoyl]-4-methoxy-3-pyridyl]oxymethyl 2-methylpropanoate, [2-[[(1*S*)-2-[(1*S*,2*S*)-2-(2,4-dimethylphenyl)-1,3-dimethyl-butoxy]-1-methyl-2-oxo-ethyl]carbamoyl]-4-methoxy-3-pyridyl]oxymethyl 2-methylpropanoate, [2-[[(1*S*)-2-[(1*S*,2*S*)-2-(2,4-difluorophenyl)-1,3-dimethyl-butoxy]-1-methyl-2-oxo-ethyl]carbamoyl]-4-methoxy-3-pyridyl]oxymethyl 2-methylpropanoate, [2-[[(1*S*)-2-[(1*S*,2*S*)-2-(2-fluoro-4-methyl-phenyl)-1,3-dimethyl-butoxy]-1-methyl-2-oxo-ethyl]carbamoyl]-4-methoxy-3-pyridyl]oxymethyl 2-methylpropanoate, [(1*S*,2*S*)-1-methyl-2-(*o*-tolyl)propyl] (2*S*)-2-[(3-acetoxy-4-methoxy-pyridine-2-carbonyl)amino]propanoate, [(1*S*,2*S*)-1-methyl-2-(*o*-tolyl)propyl] (2*S*)-2-[(4-methoxy-3-propanoyloxy-pyridine-2-carbonyl)amino]propanoate, [(1*S*,2*S*)-1-methyl-2-(*o-*tolyl)propyl] (2*S*)-2-[(3-hydroxy-4-methoxy-pyridine-2-carbonyl)amino]propanoate, [4-methoxy-2-[[(1*S*)-1-methyl-2-[(1*S*,2*S*)-1-methyl-2-(*o*-tolyl)propoxy]-2-oxo-ethyl]carbamoyl]-3-pyridyl] 2-methylpropanoate, [(1*S*,2*S*)-2-(2,4-dimethylphenyl)-1-methyl-propyl] (2*S*)-2-[(3-acetoxy-4-methoxy-pyridine-2-carbonyl)amino]propanoate, [2-[[(1*S*)-2-[(1*S*,2*S*)-2-(2,4-dimethylphenyl)-1-methyl-propoxy]-1-methyl-2-oxo-ethyl]carbamoyl]-4-methoxy-3-pyridyl] 2-methylpropanoate, [(1*S*,2*S*)-2-(2,4-dimethylphenyl)-1-methyl-propyl] (2*S*)-2-[(3-hydroxy-4-methoxy-pyridine-2-carbonyl)amino]propanoate, [(1*S*,2*S*)-2-(2,6-dimethylphenyl)-1-methyl-propyl] (2*S*)-2-[(3-acetoxy-4-methoxy-pyridine-2-carbonyl)amino]propanoate, [2-[[(1*S*)-2-[(1*S*,2*S*)-2-(2,6-dimethylphenyl)-1-methyl-propoxy]-1-methyl-2-oxo-ethyl]carbamoyl]-4-methoxy-3-pyridyl] 2-methylpropanoate, [(1*S*,2*S*)-2-(2,6-dimethylphenyl)-1-methyl-propyl] (2*S*)-2-[(3-hydroxy-4-methoxy-pyridine-2-carbonyl)-amino]propanoate, [(1*S*,2*S*)-2-[4-fluoro-2-(trifluoromethyl)phenyl]-1-methyl-propyl] (2*S*)-2-[(3-acetoxy-4-methoxy-pyridine-2-carbonyl)amino]propanoate, [2-[[(1*S*)-2-[(1*S*,2*S*)-2-[4-fluoro-2-(trifluoromethyl)phenyl]-1-methyl-propoxy]-1-methyl-2-oxoethyl]carbamoyl]-4-methoxy-3-pyridyl] 2-methylpropanoate, [(1*S*,2*S*)-2-[4-fluoro-2-(trifluoromethyl)phenyl]-1-methyl-propyl] (2*S*)-2-[(3-hydroxy-4-methoxy-pyridine-2-carbonyl)amino]-propanoate, [(1*S*,2*S*)-2-(4-fluoro-2-methyl-phenyl)-1-methyl-propyl] (2*S*)-2-[(3-acetoxy-4-methoxy-pyridine-2-carbonyl)amino]propanoate, [2-[[(1*S*)-2-[(1*S*,2*S*)-2-(4-fluoro-2-methyl-phenyl)-1-methyl-propoxy]-1-methyl-2-oxo-ethyl]carbamoyl]-4-methoxy-3-pyridyl] 2-methylpropanoate, [(1*S*,2*S*)-2-(4-fluoro-2-methyl-phenyl)-1-methyl-propyl] (2*S*)-2-[(3-hydroxy-4-methoxy-pyridine-2-carbonyl)amino]propanoate, [(1*S*,2*S*)-1-methyl-2-[2-(trifluoromethyl)phenyl]propyl] (2*S*)-2-[(3-acetoxy-4-methoxy-pyridine-2-carbonyl)amino]propanoate, [4-methoxy-2-[[(1*S*)-1-methyl-2-[(1*S*,2*S*)-1-methyl-2-[2-(trifluoromethyl)phenyl]propoxy]-2-oxo-ethyl]carbamoyl]-3-pyridyl] 2-methylpropanoate, [(1*S*,2*S*)-1-methyl-2-[2-(trifluoromethyl)phenyl]propyl] (2*S*)-2-[(3-hydroxy-4-methoxy-pyridine-2-carbonyl)amino]propanoate, [(1*S*,2*S*)-2-(4-fluoro-2,6-dimethyl-phenyl)-1-methyl-propyl] (2*S*)-2-[(3-acetoxy-4-methoxy-pyridine-2-carbonyl)amino]propanoate, [2-[[(1*S*)-2-[(1*S*,2*S*)-2-(4-fluoro-2,6-dimethyl-phenyl)-1-methyl-propoxy]-1-methyl-2-oxo-ethyl]carbamoyl]-4-methoxy-3-pyridyl] 2-methylpropanoate, [(1*S*,2*S*)-2-(4-fluoro-2,6-dimethyl-phenyl)-1-methylpropyl] (2*S*)-2-[(3-hydroxy-4-methoxy-pyridine-2-carbonyl)amino]propanoate;
   - inhibitors of complex II: benodanil (A.3.1), benzovindiflupyr (A.3.2), bixafen (A.3.3), boscalid (A.3.4), carboxin (A.3.5), fenfuram (A.3.6), fluopyram (A.3.7), flutolanil (A.3.8), fluxapyroxad (A.3.9), furametpyr (A.3.10), isofetamid (A.3.11), isopyrazam (A.3.12), mepronil (A.3.13), oxycarboxin (A.3.14), penflufen (A.3.15), penthiopyrad (A.3.16), pydiflumetofen (A.3.17), pyraziflumid (A.3.18), sedaxane (A.3.19), tecloftalam (A.3.20), thifluzamide (A.3.21), inpyrfluxam (A.3.22), pyrapropoyne (A.3.23), fluindapyr (A.3.28), N-[2-[2-chloro-4-(trifluoromethyl)phenoxy]phenyl]-3-(difluoromethyl)-5-fluoro-1-methyl-pyrazole-4-carboxamide (A.3.29), methyl (*E*)-2-[2-[(5-cyano-2-methyl-phenoxy)methyl]phenyl]-3-methoxy-prop-2-enoate (A.3.30), isoflucypram (A.3.31), 2-(difluoromethyl)-*N*-(1,1,3-trimethyl-indan-4-yl)pyridine-3-carboxamide (A.3.32), 2-(difluoromethyl)-*N*-[(3*R*)-1,1,3-trimethylindan-4-yl]pyridine-3-carboxamide (A.3.33), 2-(difluoromethyl)-*N*-(3-ethyl-1,1-dimethyl-indan-4-yl)pyridine-3-carboxamide (A.3.34), 2-(difluoromethyl)-*N*-[(3R)-3-ethyl-1,1-dimethyl-indan-4-yl]pyridine-3-carboxamide (A.3.35), 2-(difluoromethyl)-*N*-(1,1-dimethyl-3-propyl-indan-4-yl)pyridine-3-carboxamide (A.3.36), 2-(difluoromethyl)-*N*-[(3*R*)-1,1-dimethyl-3-propyl-indan-4-yl]pyridine-3-carboxamide (A.3.37), 2-(difluoromethyl)-*N*-(3-isobutyl-1,1-dimethyl-indan-4-yl)pyridine-3-carboxamide (A.3.38), 2-(difluoromethyl)-*N*-[(3*R*)-3-isobutyl-1,1-dimethyl-indan-4-yl]pyridine-3-carboxamide (A.3.39);
   - other respiration inhibitors: diflumetorim (A.4.1); nitrophenyl derivates: binapacryl (A.4.2), dinobuton (A.4.3), dinocap (A.4.4), fluazinam (A.4.5), meptyldinocap (A.4.6), ferimzone (A.4.7); organometal compounds: fentin salts, e. g. fentin-acetate (A.4.8), fentin chloride (A.4.9) or fentin hydroxide (A.4.10); ametoctradin (A.4.11); silthiofam (A.4.12);
B) Sterol biosynthesis inhibitors (SBI fungicides)
   - C14 demethylase inhibitors: triazoles: azaconazole (B.1.1), bitertanol (B.1.2), bromuconazole (B.1.3), cyproconazole (B.1.4), difenoconazole (B.1.5), diniconazole (B.1.6), diniconazole-M (B.1.7), epoxiconazole (B.1.8), fenbuconazole (B.1.9), fluquinconazole (B.1.10), flusilazole (B.1.11), flutriafol (B.1.12), hexaconazole (B.1.13), imibenconazole (B.1.14), ipconazole (B.1.15), metconazole (B.1.17), myclobutanil (B.1.18), oxpoconazole (B.1.19), paclobutrazole (B.1.20), penconazole (B.1.21), propiconazole (B.1.22), prothioconazole (B.1.23), simeconazole (B.1.24), tebuconazole (B.1.25), tetraconazole (B.1.26), triadimefon (B.1.27), triadimenol (B.1.28), triticonazole (B.1.29), uniconazole (B.1.30), 2-(2,4-difluorophenyl)-1,1-difluoro-3-(tetrazol-1-yl)-1-[5-[4-(2,2,2-trifluoroethoxy)phenyl]-2-pyridyl]propan-2-ol (B.1.31), 2-(2,4-difluorophenyl)-1,1-difluoro-3-(tetrazol-1-yl)-1-[5-[4-(trifluoromethoxy)phenyl]-2-pyridyl]propan-2-ol (B.1.32), 4-[[6-[2-(2,4-difluorophenyl)-1,1-difluoro-2-hydroxy-3-(5-sulfanyl-1,2,4-triazol-1-yl)propyl]-3-pyridyl]oxy]benzonitrile (B.1.33), ipfentrifluconazole (B.1.37), mefentrifluconazole (B.1.38), (2R)-2-[4-(4-chlorophenoxy)-2-(trifluoromethyl)phenyl]-1-(1,2,4-triazol-1-yl)propan-2-ol, (2S)-2-[4-(4-chlorophenoxy)-2-(trifluoromethyl)phenyl]-1-(1,2,4-triazol-1-yl)propan-2-ol, 2-(chloromethyl)-2-methyl-5-(p-tolylmethyl)-1-(1,2,4-triazol-1-ylmethyl)cyclopentanol (B.1.43); imidazoles: imazalil (B.1.44), pefurazoate (B.1.45), prochloraz (B.1.46), triflumizol (B.1.47); pyrimidines, pyridines, piperazines: fenarimol (B.1.49), pyrifenox (B.1.50), triforine (B.1.51), [3-(4-chloro-2-fluoro-phenyl)-5-(2,4-difluorophenyl)isoxazol-4-yl]-(3-pyridyl)methanol (B.1.52), 4-[[6-[2-(2,4-difluorophenyl)-1,1-difluoro-2-hydroxy-3-(1,2,4-triazol-1-yl)propyl]-3-pyridyl]oxy]benzonitrile (B.1.53), 2-[6-(4-bromophenoxy)-2-(trifluoromethyl)-3-pyridyl]-1-(1,2,4-triazol-1-yl)propan-2-ol (B.1.54), 2-[6-(4-chlorophenoxy)-2-(trifluoromethyl)-3-pyridyl]-1-(1,2,4-triazol-1-yl)propan-2-ol (B.1.55);
   - Delta14-reductase inhibitors: aldimorph (B.2.1), dodemorph (B.2.2), dodemorph-acetate (B.2.3), fenpropimorph (B.2.4), tridemorph (B.2.5), fenpropidin (B.2.6), piperalin (B.2.7), spiroxamine (B.2.8);
   - Inhibitors of 3-keto reductase: fenhexamid (B.3.1);
   - Other Sterol biosynthesis inhibitors: chlorphenomizole (B.4.1);
C) Nucleic acid synthesis inhibitors
   - phenylamides or acyl amino acid fungicides: benalaxyl (C.1.1), benalaxyl-M (C.1.2), kiralaxyl (C.1.3), metalaxyl (C.1.4), metalaxyl-M (C.1.5), ofurace (C.1.6), oxadixyl (C.1.7);
   - other nucleic acid synthesis inhibitors: hymexazole (C.2.1), octhilinone (C.2.2), oxolinic acid (C.2.3), bupirimate (C.2.4), 5-fluorocytosine (C.2.5), 5-fluoro-2-(p-tolylmethoxy)pyrimidin-4-amine (C.2.6), 5-fluoro-2-(4-fluorophenylmethoxy)pyrimidin-4-amine (C.2.7), 5-fluoro-2-(4-chlorophenylmethoxy)pyrimidin-4 amine (C.2.8);
D) Inhibitors of cell division and cytoskeleton
   - tubulin inhibitors: benomyl (D.1.1), carbendazim (D.1.2), fuberidazole (D1.3), thiabendazole (D.1.4), thiophanate-methyl (D.1.5), pyridachlometyl (D.1.6), *N*-ethyl-2-[(3-ethynyl-8-methyl-6-quinolyl)oxy]butanamide (D.1.8), *N*-ethyl-2-[(3-ethynyl-8-methyl-6-quinolyl)oxy]-2-methylsulfanyl-acetamide (D.1.9), 2-[(3-ethynyl-8-methyl-6-quinolyl)oxy]-*N*-(2-fluoroethyl)butanamide (D.1.10), 2-[(3-ethynyl-8-methyl-6-quinolyl)oxy]-*N*-(2-fluoroethyl)-2-methoxy-acetamide (D.1.11), 2-[(3-ethynyl-8-methyl-6-quinolyl)oxy]-*N*-propyl-butanamide (D.1.12), 2-[(3-ethynyl-8-methyl-6-quinolyl)oxy]-2-methoxy-*N*-propyl-acetamide (D.1.13), 2-[(3-ethynyl-8-methyl-6-quinolyl)oxy]-2-methylsulfanyl-*N*-propyl-acetamide (D.1.14), 2-[(3-ethynyl-8-methyl-6-quinolyl)oxy]-*N*-(2-fluoroethyl)-2-methylsulfanyl-acetamide (D.1.15), 4-(2-bromo-4-fluorophenyl)-*N*-(2-chloro-6-fluoro-phenyl)-2,5-dimethyl-pyrazol-3-amine (D.1.16);
   - other cell division inhibitors: diethofencarb (D.2.1), ethaboxam (D.2.2), pencycuron (D.2.3), fluopicolide (D.2.4), zoxamide (D.2.5), metrafenone (D.2.6), pyriofenone (D.2.7), phenamacril (D.2.8);
E) Inhibitors of amino acid and protein synthesis
   - methionine synthesis inhibitors: cyprodinil (E.1.1), mepanipyrim (E.1.2), pyrimethanil (E.1.3);
   - protein synthesis inhibitors: blasticidin-S (E.2.1), kasugamycin (E.2.2), kasugamycin hydrochloride-hydrate (E.2.3), mildiomycin (E.2.4), streptomycin (E.2.5), oxytetracyclin (E.2.6);
F) Signal transduction inhibitors
   - MAP / histidine kinase inhibitors: fluoroimid (F.1.1), iprodione (F.1.2), procymidone (F.1.3), vinclozolin (F.1.4), fludioxonil (F.1.5);
   - G protein inhibitors: quinoxyfen (F.2.1);
G) Lipid and membrane synthesis inhibitors
   - Phospholipid biosynthesis inhibitors: edifenphos (G.1.1), iprobenfos (G.1.2), pyrazophos (G.1.3), isoprothiolane (G.1.4);
   - lipid peroxidation: dicloran (G.2.1), quintozene (G.2.2), tecnazene (G.2.3), tolclofos-methyl (G.2.4), biphenyl (G.2.5), chloroneb (G.2.6), etridiazole (G.2.7), zinc thiazole (G.2.8);
   - phospholipid biosynthesis and cell wall deposition: dimethomorph (G.3.1), flumorph (G.3.2), mandipropamid (G.3.3), pyrimorph (G.3.4), benthiavalicarb (G.3.5), iprovalicarb (G.3.6), valifenalate (G.3.7);
   - compounds affecting cell membrane permeability and fatty acides: propamocarb (G.4.1);
   - inhibitors of oxysterol binding protein: oxathiapiprolin (G.5.1), fluoxapiprolin (G.5.3), 4-[1-[2-[3-(difluoromethyl)-5-methyl-pyrazol-1-yl]acetyl]-4-piperidyl]-*N*-tetralin-1-yl-pyridine-2-carboxamide (G.5.4), 4-[1-[2-[3,5-bis(difluoromethyl)pyrazol-1-yl]acetyl]-4-piperidyl]-*N*-tetralin-1-yl-pyridine-2-carboxamide (G.5.5), 4-[1-[2-[3-(difluoromethyl)-5-(trifluoromethyl)pyrazol-1-yl]acetyl]-4-piperidyl]-*N*-tetralin-1-yl-pyridine-2-carboxamide (G.5.6), 4-[1-[2-[5-cyclopropyl-3-(difluoromethyl)pyrazol-1-yl]acetyl]-4-piperidyl]-*N*-tetralin-1-yl-pyridine-2-carboxamide (G.5.7), 4-[1-[2-[5-methyl-3-(trifluoromethyl)pyrazol-1-yl]acetyl]-4-piperidyl]-*N*-tetralin-1-yl-pyridine-2-carboxamide (G.5.8), 4-[1-[2-[5-(difluoromethyl)-3-(trifluoromethyl)pyrazol-1-yl]acetyl]-4-piperidyl]-*N*-tetralin-1-yl-pyridine-2-carboxamide (G.5.9), 4-[1-[2-[3,5-bis(trifluoromethyl)pyrazol-1-yl]acetyl]-4-piperidyl]-*N*-tetralin-1-yl-pyridine-2-carboxamide (G.5.10), (4-[1-[2-[5-cyclopropyl-3-(trifluoromethyl)pyrazol-1-yl]acetyl]-4-piperidyl]-*N*-tetralin-1-yl-pyridine-2-carboxamide (G.5.11);
H) Inhibitors with Multi Site Action
   - inorganic active substances: Bordeaux mixture (H.1.1), copper (H.1.2), copper acetate (H.1.3), copper hydroxide (H.1.4), copper oxychloride (H.1.5), basic copper sulfate (H.1.6), sulfur (H.1.7);
   - thio- and dithiocarbamates: ferbam (H.2.1), mancozeb (H.2.2), maneb (H.2.3), metam (H.2.4), metiram (H.2.5), propineb (H.2.6), thiram (H.2.7), zineb (H.2.8), ziram (H.2.9);
   - organochlorine compounds: anilazine (H.3.1), chlorothalonil (H.3.2), captafol (H.3.3), captan (H.3.4), folpet (H.3.5), dichlofluanid (H.3.6), dichlorophen (H.3.7), hexachlorobenzene (H.3.8), pentachlorphenole (H.3.9) and its salts, phthalide (H.3.10), tolylfluanid (H.3.11);
   - guanidines and others: guanidine (H.4.1), dodine (H.4.2), dodine free base (H.4.3), guazatine (H.4.4), guazatine-acetate (H.4.5), iminoctadine (H.4.6), iminoctadine-triacetate (H.4.7), iminoctadine-tris(albesilate) (H.4.8), dithianon (H.4.9), 2,6-dimethyl-1*H*,5*H*-[1,4]dithiino[2,3-c:5,6-c']dipyrrole-1,3,5,7(2*H*,6*H*)-tetraone (H.4.10);
I) Cell wall synthesis inhibitors
   - inhibitors of glucan synthesis: validamycin (I.1.1), polyoxin B (I.1.2);
   - melanin synthesis inhibitors: pyroquilon (I.2.1), tricyclazole (I.2.2), carpropamid (I.2.3), dicyclomet (I.2.4), fenoxanil (I.2.5);
J) Plant defense inducers
   - acibenzolar-S-methyl (J.1.1), probenazole (J.1.2), isotianil (J.1.3), tiadinil (J.1.4), prohexadione-calcium (J.1.5); phosphonates: fosetyl (J.1.6), fosetyl-aluminum (J.1.7), phosphorous acid and its salts (J.1.8), calcium phosphonate (J.1.11), potassium phosphonate (J.1.12), potassium or sodium bicarbonate (J.1.9), 4-cyclopropyl-*N*-(2,4-dimethoxyphenyl)thiadiazole-5-carboxamide (J.1.10);
K) Unknown mode of action
   - bronopol (K.1.1), chinomethionat (K.1.2), cyflufenamid (K.1.3), cymoxanil (K.1.4), dazomet (K.1.5), debacarb (K.1.6), diclocymet (K.1.7), diclomezine (K.1.8), difenzoquat (K.1.9), difenzoquat-methylsulfate (K.1.10), diphenylamin (K.1.11), fenitropan (K.1.12), fenpyrazamine (K.1.13), flumetover (K.1.14), flusulfamide (K.1.15), flutianil (K.1.16), harpin (K.1.17), methasulfocarb (K.1.18), nitrapyrin (K.1.19), nitrothal-isopropyl (K.1.20), tolprocarb (K.1.21), oxin-copper (K.1.22), proquinazid (K.1.23), tebufloquin (K.1.24), tecloftalam (K.1.25), triazoxide (K.1.26), *N*'-(4-(4-chloro-3-trifluoromethyl-phenoxy)-2,5-dimethyl-phenyl)-*N*-ethyl-*N*-methyl formamidine (K.1.27), *N*'-(4-(4-fluoro-3-trifluoromethyl-phenoxy)-2,5-dimethyl-phenyl)-*N*-ethyl-*N-*methyl formamidine (K.1.28), *N*'-[4-[[3-[(4-chlorophenyl)methyl]-1,2,4-thiadiazol-5-yl]oxy]-2,5-dimethyl-phenyl]-*N*-ethyl-*N*-methyl-formamidine (K.1.29), *N*'-(5-bromo-6-indan-2-yloxy-2-methyl-3-pyridyl)-*N*-ethyl-*N*-methyl-formamidine (K.1.30), *N*'-[5-bromo-6-[1-(3,5-difluorophenyl)ethoxy]-2-methyl-3-pyridyl]-*N*-ethyl-*N*-methyl-formamidine (K.1.31), *N*'-[5-bromo-6-(4-isopropylcyclohexoxy)-2-methyl-3-pyridyl]-*N*-ethyl-*N*-methyl-formamidine (K.1.32), *N*'-[5-bromo-2-methyl-6-(1-phenylethoxy)-3-pyridyl]-*N*-ethyl-*N*-methyl-formamidine (K.1.33), *N*'-(2-methyl-5-trifluoromethyl-4-(3-trimethylsilanyl-propoxy)-phenyl)-*N*-ethyl-*N*-methyl formamidine (K.1.34), *N*'-(5-difluoromethyl-2-methyl-4-(3-trimethylsilanyl-propoxy)-phenyl)-*N*-ethyl-*N*-methyl formamidine (K.1.35), 2-(4-chloro-phenyl)-*N*-[4-(3,4-dimethoxy-phenyl)-isoxazol-5-yl]-2-prop-2-ynyloxy-acetamide (K.1.36), 3-[5-(4-chloro-phenyl)-2,3-dimethyl-isoxazolidin-3-yl]-pyridine (pyrisoxazole) (K.1.37), 3-[5-(4-methylphenyl)-2,3-dimethyl-isoxazolidin-3-yl]-pyridine (K.1.38), 5-chloro-1-(4,6-dimethoxy-pyrimidin-2-yl)-2-methyl-1*H*-benzoimidazole (K.1.39), ethyl (*Z*)-3-amino-2-cyano-3-phenyl-prop-2-enoate (K.1.40), picarbutrazox (K.1.41), pentyl *N*-[6-[[(*Z*)-[(1-methyltetrazol-5-yl)-phenyl-methylene]amino]oxymethyl]-2-pyridyl]carbamate (K.1.42), but-3-ynyl *N*-[6-[[(*Z*)-[(1-methyltetrazol-5-yl)-phenyl-methylene]amino]oxymethyl]-2-pyridyl]carbamate (K.1.43), ipflufenoquin (K.1.44), quinofumelin (K.1.47), benziothiazolinone (K.1.48), bromothalonil (K.1.49), 2-(6-benzyl-2-pyridyl)quinazoline (K.1.50), 2-[6-(3-fluoro-4-methoxy-phenyl)-5-methyl-2-pyridyl]-quinazoline (K.1.51), dichlobentiazox (K.1.52), *N*'-(2,5-dimethyl-4-phenoxy-phenyl)-*N*-ethyl-*N-*methyl-formamidine (K.1.53), aminopyrifen (K.1.54), fluopimomide (K.1.55), *N*'-[5-bromo-2-methyl-6-(1-methyl-2-propoxy-ethoxy)-3-pyridyl]-N-ethyl-N-methyl-formamidine (K.1.56), N'-[4-(4,5-dichlorothiazol-2-yl)oxy-2,5-dimethyl-phenyl]-N-ethyl-N-methyl-formamidine (K.1.57), N-(2-fluorophenyl)-4-[5-(trifluoromethyl)-1,2,4-oxadiazol-3-yl]benzamide (K.1.58), N-methyl-4-[5-(trifluoromethyl)-1,2,4-oxadiazol-3-yl]benzenecarbothioamide (K.1.59);
L) Biopesticides
   L1) Microbial pesticides with fungicidal, bactericidal, viricidal and/or plant defense activator activity: *Ampelomyces quisqualis, Aspergillus flavus, Aureobasidium pullulans, Bacillus altitudinis, B. amyloliquefaciens, B. amyloliquefaciens* ssp. *plantarum* (also referred to as *B. velezensis), B. megaterium, B. mojavensis, B. mycoides, B. pumilus, B. simplex, B. solisalsi, B. subtilis, B. subtilis* var. *amyloliquefaciens, B. velezensis, Candida oleophila, C. saitoana, Clavibacter michiganensis* (bacteriophages), *Coniothyrium minitans, Cryphonectria parasitica, Cryptococcus albidus, Dilophosphora alopecuri, Fusarium oxysporum, Clonostachys rosea* f. *catenulate* (also named *Gliocladium catenulatum), Gliocladium roseum, Lysobacter antibioticus, L. enzymogenes, Metschnikowia fructicola, Microdochium dimerum, Microsphaeropsis ochracea, Muscodor albus, Paenibacillus alvei, Paenibacillus epiphyticus, P. polymyxa, Pantoea vagans, Penicillium bilaiae, Phlebiopsis gigantea, Pseudomonas* sp., *Pseudomonas chloraphis, Pseudozyma flocculosa, Pichia anomala, Pythium oligandrum, Sphaerodes mycoparasitica, Streptomyces griseoviridis, S. lydicus, S. violaceusniger, Talaromyces flavus, Trichoderma asperelloides, T. asperellum, T. atroviride, T. fertile, T. gamsii, T. harmatum, T. harzianum, T. polysporum, T. stromaticum, T. virens, T. viride, Typhula phacorrhiza, Ulocladium oudemansii, Verticillium dahlia,* zucchini yellow mosaic virus (avirulent strain);
   L2) Biochemical pesticides with fungicidal, bactericidal, viricidal and/or plant defense activator activity: harpin protein, *Reynoutria sachalinensis* extract;
   L3) Microbial pesticides with insecticidal, acaricidal, molluscidal and/or nematicidal activity: *Agrobacterium radiobacter, Bacillus cereus, B. firmus, B. thuringiensis, B. thuringiensis* ssp. *aizawai, B. t.* ssp. *israelensis, B. t.* ssp. *galleriae, B. t.* ssp. *kurstaki, B. t.* ssp. *tenebrionis, Beauveria bassiana, B. brongniartii, Burkholderia* spp., *Chromobacterium subtsugae, Cydia pomonella* granulovirus (CpGV), *Cryptophlebia leucotreta* granulovirus (CrleGV), *Flavobacterium* spp., *Helicoverpa armigera* nucleopolyhedrovirus (HearNPV), *Helicoverpa zea* nucleopolyhedrovirus (HzNPV), *Helicoverpa zea* single capsid nucleopolyhedrovirus (HzSNPV), *Heterorhabditis bacteriophora, Isaria fumosorosea, Lecanicillium longisporum, L. muscarium, Metarhizium anisopliae, M. anisopliae* var. *anisopliae, M. anisopliae* var. *acridum, Nomuraea rileyi, Paecilomyces fumosorosea, P. lilacinus, Paenibacillus popilliae, Pasteuria* spp., *P. nishizawae, P. penetrans, P. ramosa, P. thornea, P. usgae, Pseudomonas fluorescens, Spodoptera littoralis* nucleopolyhedrovirus (SpliNPV), *Steinernema carpocapsae, S. feltiae, S. kraussei, Streptomyces galbus, S. microflavus;*
   L4) Biochemical pesticides with insecticidal, acaricidal, molluscidal, pheromone and/or nematicidal activity: L-carvone, citral, (*E,Z*)-7,9-dodecadien-1-yl acetate, ethyl formate, (*E,Z*)-2,4-ethyl decadienoate (pear ester), (*Z,Z,E*)-7,11,13-hexadecatrienal, heptyl butyrate, isopropyl myristate, lavanulyl senecioate, cis-jasmone, 2-methyl 1-butanol, methyl eugenol, methyl jasmonate, (*E*,*Z*)-2,13-octadecadien-1-ol, (*E*,*Z*)-2,13-octadecadien-1-ol acetate, (*E,Z*)-3,13-octadecadien-1-ol, (*R*)-1-octen-3-ol, pentatermanone, (*E,Z,Z*)-3,8,11-tetradecatrienyl acetate, (*Z,E*)-9,12-tetradecadien-1-yl acetate, (*Z*)-7-tetradecen-2-one, (*Z*)-9-tetradecen-1-yl acetate, (*Z*)-11-tetradecenal, (*Z*)-11-tetradecen-1-ol, extract of *Chenopodium ambrosiodes,* Neem oil, Quillay extract;
   L5) Microbial pesticides with plant stress reducing, plant growth regulator, plant growth promoting and/or yield enhancing activity: *Azospirillum amazonense, A. brasilense, A. lipoferum, A. irakense, A. halopraeferens, Bradyrhizobium* spp., *B. elkanii, B. japonicum, B. liaoningense, B. lupini, Delftia acidovorans, Glomus intraradices, Mesorhizobium* spp., *Rhizobium leguminosarum* bv. *phaseoli, R. I.* bv. *trifolii, R. I.* bv. *viciae, R. tropici, Sinorhizobium meliloti*;
O) Insecticides from classes O.1 to O.29
   O.1 Acetylcholine esterase (AChE) inhibitors: aldicarb, alanycarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, trimethacarb, XMC, xylylcarb, triazamate; acephate, azamethiphos, azinphos-ethyl, azinphosmethyl, cadusafos, chlorethoxyfos, chlorfenvinphos, chlormephos, chlorpyrifos, chlorpyrifos-methyl, coumaphos, cyanophos, demeton-S-methyl, diazinon, dichlorvos/ DDVP, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl O-(methoxyaminothio-phosphoryl) salicylate, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos- methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion;
   O.2 GABA-gated chloride channel antagonists: endosulfan, chlordane; ethiprole, fipronil, flufiprole, pyrafluprole, pyriprole;
   O.3 Sodium channel modulators: acrinathrin, allethrin, d-cis-trans allethrin, d-trans allethrin, bifenthrin, kappa-bifenthrin, bioallethrin, bioallethrin S-cylclopentenyl, bioresmethrin, cycloprothrin, cyfluthrin, beta-cyfluthrin, cyhalothrin, lambda-cyhalothrin, gamma-cyhalothrin, cypermethrin, alpha-cypermethrin, beta-cypermethrin, theta-cypermethrin, zeta-cypermethrin, cyphenothrin, deltamethrin, empenthrin, esfenvalerate, etofenprox, fenpropathrin, fenvalerate, flucythrinate, flumethrin, tau-fluvalinate, halfenprox, heptafluthrin, imiprothrin, meperfluthrin, metofluthrin, momfluorothrin, epsilon-momfluorothrin, permethrin, phenothrin, prallethrin, profluthrin, pyrethrin (pyrethrum), resmethrin, silafluofen, tefluthrin, kappa-tefluthrin, tetramethylfluthrin, tetramethrin, tralomethrin, transfluthrin; DDT, methoxychlor;
   O.4 Nicotinic acetylcholine receptor (nAChR) agonists: acetamiprid, clothianidin, cycloxaprid, dinotefuran, imidacloprid, nitenpyram, thiacloprid, thiamethoxam; 4,5-dihydro-*N*-nitro-1-(2-oxiranylmethyl)-1*H*-imidazol-2-amine, (2*E*)-1-[(6-chloropyridin-3-yl)methyl]-*N*'-nitro-2-pentylidenehydrazinecarboximidamide; 1-[(6-chloropyridin-3-yl)methyl]-7-methyl-8-nitro-5-propoxy-1,2,3,5,6,7-hexahydroimidazo[1,2-a]pyridine; nicotine; sulfoxaflor, flupyradifurone, triflumezopyrim, (3*R*)-3-(2-chlorothiazol-5-yl)-8-methyl-5-oxo-6-phenyl-2,3-dihydrothiazolo[3,2-a]pyrimidin-8-ium-7-olate, (3*S*)-3-(6-chloro-3-pyridyl)-8-methyl-5-oxo-6-phenyl-2,3-dihydrothiazolo[3,2-a]pyrimidin-8-ium-7-olate, (3*S*)-8-methyl-5-oxo-6-phenyl-3-pyrimidin-5-yl-2,3-dihydrothiazolo[3,2-a]pyrimidin-8-ium-7-olate, (3*R*)-3-(2-chlorothiazol-5-yl)-8-methyl-5-oxo-6-[3-(trifluoromethyl)phenyl]-2,3-dihydrothiazolo[3,2-a]pyrimidin-8-ium-7-olate; (3*R*)-3-(2-chlorothiazol-5-yl)-6-(3,5-dichlorophenyl)-8-methyl-5-oxo-2,3-dihydrothiazolo[3,2-a]pyrimidin-8-ium-7-olate, (3*R*)-3-(2-chlorothiazol-5-yl)-8-ethyl-5-oxo-6-phenyl-2,3-dihydrothiazolo[3,2-a]pyrimidin-8-ium-7-olate;
   O.5 Nicotinic acetylcholine receptor allosteric activators: spinosad, spinetoram;
   O.6 Chloride channel activators: abamectin, emamectin benzoate, ivermectin, lepimectin, milbemectin;
   O.7 Juvenile hormone mimics: hydroprene, kinoprene, methoprene; fenoxycarb, pyriproxyfen;
   O.8 miscellaneous non-specific (multi-site) inhibitors: methyl bromide and other alkyl halides; chloropicrin, sulfuryl fluoride, borax, tartar emetic;
   O.9 Chordotonal organ TRPV channel modulators: pymetrozine, pyrifluquinazon;
   O.10 Mite growth inhibitors: clofentezine, hexythiazox, diflovidazin; etoxazole;
   O.11 Microbial disruptors of insect midgut membranes: *Bacillus thuringiensis, Bacillus sphaericus* and the insecticdal proteins they produce: *Bacillus thuringiensis* subsp. *israelensis, Bacillus sphaericus, Bacillus thuringiensis* subsp. *aizawai, Bacillus thuringiensis* subsp. *kurstaki, Bacillus thuringiensis* subsp. *tenebrionis,* the Bt crop proteins: Cry1Ab, Cry1Ac, Cry1Fa, Cry2Ab, mCry3A, Cry3Ab, Cry3Bb, Cry34/35Ab1;
   0.12 Inhibitors of mitochondrial ATP synthase: diafenthiuron; azocyclotin, cyhexatin, fenbutatin oxide, propargite, tetradifon;
   0.13 Uncouplers of oxidative phosphorylation via disruption of the proton gradient: chlorfenapyr, DNOC, sulfluramid;
   0.14 Nicotinic acetylcholine receptor (nAChR) channel blockers: bensultap, cartap hydrochloride, thiocyclam, thiosultap sodium;
   0.15 Inhibitors of the chitin biosynthesis type 0: bistrifluron, chlorfluazuron, diflubenzuron, flucycloxuron, flufenoxuron, hexaflumuron, lufenuron, novaluron, noviflumuron, teflubenzuron, triflumuron;
   0.16 Inhibitors of the chitin biosynthesis type 1: buprofezin;
   0.17 Moulting disruptors: cyromazine;
   0.18 Ecdyson receptor agonists: methoxyfenozide, tebufenozide, halofenozide, fufenozide, chromafenozide;
   0.19 Octopamin receptor agonists: amitraz;
   O.20 Mitochondrial complex III electron transport inhibitors: hydramethylnon, acequinocyl, fluacrypyrim, bifenazate;
   0.21 Mitochondrial complex I electron transport inhibitors: fenazaquin, fenpyroximate, pyrimidifen, pyridaben, tebufenpyrad, tolfenpyrad; rotenone;
   O.22 Voltage-dependent sodium channel blockers: indoxacarb, metaflumizone, 2-[2-(4-cyanophenyl)-1-[3-(trifluoromethyl)phenyl]ethylidene]-*N*-[4-(difluoromethoxy)phenyl]-hydrazine-carboxamide, *N*-(3-chloro-2-methylphenyl)-2-[(4-chlorophenyl)-[4-[methyl(methylsulfonyl)-amino]phenyl]methylene]-hydrazinecarboxamide;
   O.23 Inhibitors of the of acetyl CoA carboxylase: spirodiclofen, spiromesifen, spirotetramat, spiropidion;
   O.24 Mitochondrial complex IV electron transport inhibitors: aluminium phosphide, calcium phosphide, phosphine, zinc phosphide, cyanide;
   O.25 Mitochondrial complex II electron transport inhibitors: cyenopyrafen, cyflumetofen;
   O.26 Ryanodine receptor-modulators: flubendiamide, chlorantraniliprole, cyantraniliprole, cyclaniliprole, tetraniliprole; (*R*)-3-chloro-*N*¹-{2-methyl-4-[1,2,2,2-tetrafluoro-1-(trifluoromethyl)-ethyl]phenyl}-*N*²-(1-methyl-2-methylsulfonylethyl)phthalamide, (*S*)-3-chloro-*N*¹-{2-methyl-4-[1,2,2,2-tetrafluoro-1-(trifluoromethyl)ethyl]phenyl}-*N*²-(1-methyl-2-methylsulfonylethyl)-phthalamide, methyl-2-[3,5-dibromo-2-({[3-bromo-1-(3-chloropyridin-2-yl)-1*H*-pyrazol-5-yl]-carbonyl}amino)benzoyl]-1,2-dimethylhydrazinecarboxylate; *N*-[4,6-dichloro-2-[(diethyl-lambda-4-sulfanylidene)carbamoyl]-phenyl]-2-(3-chloro-2-pyridyl)-5-(trifluoromethyl)pyrazole-3-carboxamide; *N*-[4-chloro-2-[(diethyl-lambda-4-sulfanylidene)carbamoyl]-6-methyl-phenyl]-2-(3-chloro-2-pyridyl)-5-(trifluoromethyl)pyrazole-3-carboxamide; *N*-[4-chloro-2-[(di-2-propyl-lambda-4-sulfanylidene)carbamoyl]-6-methyl-phenyl]-2-(3-chloro-2-pyridyl)-5-(trifluoromethyl)pyrazole-3-carboxamide; *N*-[4,6-dichloro-2-[(di-2-propyl-lambda-4-sulfanylidene)carbamoyl]-phenyl]-2-(3-chloro-2-pyridyl)-5-(trifluoromethyl)pyrazole-3-carboxamide; *N*-[4,6-dibromo-2-[(diethyl-lambda-4-sulfanylidene)carbamoyl]-phenyl]-2-(3-chloro-2-pyridyl)-5-(trifluoromethyl)pyrazole-3-carboxamide; *N*-[2-(5-amino-1,3,4-thiadiazol-2-yl)-4-chloro-6-methylphenyl]-3-bromo-1-(3-chloro-2-pyridinyl)-1*H*-pyrazole-5-carboxamide; 3-chloro-1-(3-chloro-2-pyridinyl)-*N*-[2,4-dichloro-6-[[(1-cyano-1-methylethyl)amino]carbonyl]phenyl]-1*H*-pyrazole-5-carboxamide; tetrachlorantraniliprole; *N*-[4-chloro-2-[[(1,1-dimethylethyl)amino]carbonyl]-6-methylphenyl]-1-(3-chloro-2-pyridinyl)-3-(fluoromethoxy)-1*H*-pyrazole-5-carboxamide; cyhalodiamide;
   O.27: Chordotonal organ modulators - undefined target site: flonicamid;
   O.28. insecticidal compounds of unknown or uncertain mode of action: afidopyropen, afoxolaner, azadirachtin, amidoflumet, benzoximate, broflanilide, bromopropylate, chinomethionat, cryolite, dicloromezotiaz, dicofol, flufenerim, flometoquin, fluensulfone, fluhexafon, fluopyram, fluralaner, metoxadiazone, piperonyl butoxide, pyflubumide, pyridalyl, tioxazafen, 11-(4-chloro-2,6-dimethylphenyl)-12-hydroxy-1,4-dioxa-9-azadispiro[4.2.4.2]-tetradec-11-en-10-one, 3-(4'-fluoro-2,4-dimethylbiphenyl-3-yl)-4-hydroxy-8-oxa-1-azaspiro[4.5]dec-3-en-2-one, 1-[2-fluoro-4-methyl-5-[(2,2,2-trifluoroethyl)sulfinyl]phenyl]-3-(trifluoromethyl)-1*H*-1,2,4-triazole-5-amine, *Bacillus firmus* I-1582; flupyrimin; fluazaindolizine; 4-[5-(3,5-dichlorophenyl)-5-(trifluoromethyl)-4*H*-isoxazol-3-yl]-2-methyl-*N*-(1-oxothietan-3-yl)benzamide; fluxametamide; 5-[3-[2,6-dichloro-4-(3,3-dichloroallyloxy)phenoxy]propoxy]-1*H*-pyrazole; 4-cyano-*N*-[2-cyano-5-[[2,6-dibromo-4-[1,2,2,3,3,3-hexafluoro-1-(trifluoromethyl)propyl]phenyl]carbamoyl]phenyl]-2-methyl-benzamide; 4-cyano-3-[(4-cyano-2-methyl-benzoyl)amino]-*N*-[2,6-dichloro-4-[1,2,2,3,3,3-hexafluoro-1-(trifluoromethyl)propyl]phenyl]-2-fluoro-benzamide; *N*-[5-[[2-chloro-6-cyano-4-[1,2,2,3,3,3-hexafluoro-1-(trifluoromethyl)propyl]phenyl]carbamoyl]-2-cyano-phenyl]-4-cyano-2-methyl-benzamide; *N*-[5-[[2-bromo-6-chloro-4-[2,2,2-trifluoro-1-hydroxy-1-(trifluoromethyl)-ethyl]phenyl]carbamoyl]-2-cyano-phenyl]-4-cyano-2-methyl-benzamide; *N*-[5-[[2-bromo-6-chloro-4-[1,2,2,3,3,3-hexafluoro-1-(trifluoromethyl)propyl]phenyl]carbamoyl]-2-cyano-phenyl]-4-cyano-2-methyl-benzamide; 4-cyano-*N*-[2-cyano-5-[[2,6-dichloro-4-[1,2,2,3,3,3-hexafluoro-1-(trifluoromethyl)propyl]phenyl]carbamoyl]phenyl]-2-methyl-benzamide; 4-cyano-*N*-[2-cyano-5-[[2,6-dichloro-4-[1,2,2,2-tetrafluoro-1-(trifluoromethyl)ethyl]phenyl]carbamoyl]phenyl]-2-methyl-benzamide; *N*-[5-[[2-bromo-6-chloro-4-[1,2,2,2-tetrafluoro-1-(trifluoromethyl)ethyl]phenyl]carbamoyl]-2-cyano-phenyl]-4-cyano-2-methyl-benzamide; 2-(1,3-dioxan-2-yl)-6-[2-(3-pyridinyl)-5-thiazolyl]-pyridine; 2-[6-[2-(5-fluoro-3-pyridinyl)-5-thiazolyl]-2-pyridinyl]-pyrimidine; 2-[6-[2-(3-pyridinyl)-5-thiazolyl]-2-pyridinyl]-pyrimidine; *N*-methylsulfonyl-6-[2-(3-pyridyl)thiazol-5-yl]pyridine-2-carboxamide; *N*-methylsulfonyl-6-[2-(3-pyridyl)thiazol-5-yl]pyridine-2-carboxamide; 1-[(6-chloro-3-pyridinyl)methyl]-1,2,3,5,6,7-hexahydro-5-methoxy-7-methyl-8-nitro-imidazo[1,2-a]pyridine; 1-[(6-chloropyridin-3-yl)methyl]-7-methyl-8-nitro-1,2,3,5,6,7-hexahydroimidazo[1,2-a]pyridin-5-ol; 1-isopropyl-*N*,5-dimethyl-*N*-pyridazin-4-yl-pyrazole-4-carboxamide; 1-(1,2-dimethylpropyl)-*N*-ethyl-5-methyl-*N*-pyridazin-4-yl-pyrazole-4-carboxamide; *N*,5-dimethyl-*N*-pyridazin-4-yl-1-(2,2,2-trifluoro-1-methyl-ethyl)pyrazole-4-carboxamide; 1-[1-(1-cyanocyclopropyl)ethyl]-*N*-ethyl-5-methyl-*N*-pyridazin-4-yl-pyrazole-4-carboxamide; *N*-ethyl-1-(2-fluoro-1-methyl-propyl)-5-meth-yl-*N*-pyridazin-4-yl-pyrazole-4-carboxamide; 1-(1,2-dimethylpropyl)-*N*,5-dimethyl-*N*-pyridazin-4-yl-pyrazole-4-carboxamide; 1-[1-(1-cyanocyclopropyl)ethyl]-*N*,5-dimethyl-*N*-pyridazin-4-yl-pyrazole-4-carboxamide; *N*-methyl-1-(2-fluoro-1-methyl-propyl]-5-methyl-*N*-pyridazin-4-yl-pyrazole-4-carboxamide; 1-(4,4-difluorocyclohexyl)-*N*-ethyl-5-methyl-*N*-pyridazin-4-yl-pyrazole-4-carboxamide; 1-(4,4-difluorocyclohexyl)-*N*,5-dimethyl-*N*-pyridazin-4-yl-pyrazole-4-carboxamide, *N*-(1-methylethyl)-2-(3-pyridinyl)-2*H*-indazole-4-carboxamide; *N*-cyclopropyl-2-(3-pyridinyl)-2*H*-indazole-4-carboxamide; *N*-cyclohexyl-2-(3-pyridinyl)-2*H*-indazole-4-carboxamide; 2-(3-pyridinyl)-*N*-(2,2,2-trifluoroethyl)-2*H*-indazole-4-carboxamide; 2-(3-pyridinyl)-*N*-[(tetrahydro-2-furanyl)methyl]-2*H*-indazole-5-carboxamide; methyl 2-[[2-(3-pyridinyl)-2*H-*indazol-5-yl]carbonyl]hydrazinecarboxylate; *N*-[(2,2-difluorocyclopropyl)methyl]-2-(3-pyridinyl)-2*H*-indazole-5-carboxamide; *N*-(2,2-difluoropropyl)-2-(3-pyridinyl)-2*H*-indazole-5-carboxamide; 2-(3-pyridinyl)-*N*-(2-pyrimidinylmethyl)-2*H*-indazole-5-carboxamide; *N*-[(5-methyl-2-pyrazinyl)-methyl]-2-(3-pyridinyl)-2*H*-indazole-5-carboxamide, tyclopyrazoflor; sarolaner, lotilaner, *N*-[4-chloro-3-[[(phenylmethyl)amino]carbonyl]phenyl]-1-methyl-3-(1,1,2,2,2-pentafluoroethyl)-4-(trifluoromethyl)-1*H*-pyrazole-5-carboxamide; 2-(3-ethylsulfonyl-2-pyridyl)-3-methyl-6-(trifluoromethyl)imidazo[4,5-b]pyridine, 2-[3-ethylsulfonyl-5-(trifluoromethyl)-2-pyridyl]-3-methyl-6-(trifluoromethyl)imidazo[4,5-b]pyridine, isocycloseram, *N*-[4-chloro-3-(cyclopropylcarbamoyl)phenyl]-2-methyl-5-(1,1,2,2,2-pentafluoroethyl)-4-(trifluoromethyl)-pyrazole-3-carboxamide, *N*-[4-chloro-3-[(1-cyanocyclopropyl)carbamoyl]phenyl]-2-methyl-5-(1,1,2,2,2-pentafluoroethyl)-4-(trifluoromethyl)pyrazole-3-carboxamide; acynonapyr; benzpyrimoxan; tigolaner; chloro-*N*-(1-cyanocyclopropyl)-5-[1-[2-methyl-5-(1,1,2,2,2-pentafluoroethyl)-4-(trifluoromethyl)pyrazol-3-yl]pyrazol-4-yl]benzamide, oxazosulfyl, [(2*S*,3*R*,4*R*,5*S*,6*S*)-3,5-dimethoxy-6-methyl-4-propoxy-tetrahydropyran-2-yl]-*N*-[4-[1-[4-(trifluoromethoxy)phenyl]-1,2,4-triazol-3-yl]phenyl]carbamate, [(2*S*,3*R*,4*R*,5*S*,6*S*)-3,4,5-trimethoxy-6-methyl-tetrahydropyran-2-yl] N-[4-[1-[4-(trifluoromethoxy)phenyl]-1,2,4-triazol-3-yl]phenyl]carbamate, [(2*S*,3*R*,4*R*,5*S*,6*S*)-3,5-dimethoxy-6-methyl-4-propoxy-tetrahydropyran-2-yl]-*N*-[4-[1-[4-(1,1,2,2,2-pentafluoroethoxy)phenyl]-1,2,4-triazol-3-yl]phenyl]carbamate, [(2*S*,3*R*,4*R*,5*S*,6*S*)-3,4,5-trimethoxy-6-methyl-tetrahydropyran-2-yl]-*N*-[4-[1-[4-(1,1,2,2,2-pentafluoroethoxy)phenyl]-1,2,4-triazol-3-yl]phenyl]carbamate, (2*Z*)-3-(2-isopropylphenyl)-2-[(*E*)-[4-[1-[4-(1,1,2,2,2-pentafluoroethoxy)phenyl]-1,2,4-triazol-3-yl]phenyl]methylenehydrazono]thiazolidin-4-one; 2-(6-chloro-3-ethylsulfonyl-imidazo[1,2-a]pyridin-2-yl)-3-methyl-6-(trifluoromethyl)imidazo[4,5-b]pyridine, 2-(6-bromo-3-ethylsulfonyl-imidazo[1,2-a]pyridin-2-yl)-3-methyl-6-(trifluoromethyl)imidazo[4,5-b]pyridine, 2-(3-ethylsulfonyl-6-iodo-imidazo[1,2-a]pyridin-2-yl)-3-methyl-6-(trifluoromethyl)imidazo-[4,5-b]pyridine, 2-[3-ethylsulfonyl-6-(trifluoromethyl)imidazo[1,2-a]pyridin-2-yl]-3-methyl-6-(trifluoromethyl)imidazo[4,5-b]pyridine, 2-(7-chloro-3-ethylsulfonyl-imidazo[1,2-a]pyridin-2-yl)-3-methyl-6-(trifluoromethyl)imidazo[4,5-b]pyridine, 2-(3-ethylsulfonyl-7-iodo-imidazo[1,2-a]pyridin-2-yl)-3-methyl-6-(trifluoromethyl)imidazo[4,5-b]pyridine, 3-ethylsulfonyl-6-iodo-2-[3-methyl-6-(trifluoromethyl)imidazo[4,5-b]pyridin-2-yl]imidazo[1,2-a]pyridine-8-carbonitrile, 2-[3-ethylsulfonyl-8-fluoro-6-(trifluoromethyl)imidazo[1,2-a]pyridin-2-yl]-3-methyl-6-(trifluoromethyl)imidazo[4,5-b]pyridine, 2-[3-ethylsulfonyl-7-(trifluoromethyl)imidazo[1,2-a]pyridin-2-yl]-3-methyl-6-(trifluoromethylsulfinyl)imidazo[4,5-b]pyridine, 2-[3-ethylsulfonyl-7-(trifluoromethyl)imidazo[1,2-a]pyridin-2-yl]-3-methyl-6-(trifluoromethyl)imidazo[4,5-c]pyridine, 2-(6-bromo-3-ethylsulfonyl-imidazo[1,2-a]pyridin-2-yl)-6-(trifluoromethyl)pyrazolo[4,3-c]pyridine.

According to the invention, the solid material (dry matter) of the biopesticides (with the exception of oils such as Neem oil) are considered as active components (e. g. to be obtained after drying or evaporation of the extraction or suspension medium in case of liquid formulations of the microbial pesticides). The weight ratios and percentages used for a biological extract such as Quillay extract are based on the total weight of the dry content (solid material) of the respective extract(s).
The total weight ratios of compositions comprising at least one microbial pesticide in the form of viable microbial cells including dormant forms, can be determined using the amount of CFU of the respective microorganism to calculate the total weight of the respective active component with the following equation that 1 x 10¹⁰ CFU equals one gram of total weight of the respective active component. Colony forming unit is measure of viable microbial cells. In addition, CFU may also be understood as the number of (juvenile) individual nematodes in case of nematode biopesticides, such as *Steinernema feltiae.*
In the binary mixtures the weight ratio of the pesticide contained in microparticles of the invention and the component 2) generally depends from the properties of the components used, usually it is in the range of from 1:10,000 to 10,000:1, often from 1:100 to 100:1, regularly from 1:50 to 50:1, preferably from 1:20 to 20:1, more preferably from 1:10 to 10:1, even more preferably from 1:4 to 4:1 and in particular from 1:2 to 2:1. According to further embodiments, the weight ratio of the component 1) and the component 2) usually is in the range of from 1000:1 to 1:1, often from 100: 1 to 1:1, regularly from 50:1 to 1:1, preferably from 20:1 to 1:1, more preferably from 10:1 to 1:1, even more preferably from 4:1 to 1:1 and in particular from 2:1 to 1:1. According to further embodiments, the weight ratio of the component 1) and the component 2) usually is in the range of from 20,000:1 to 1:10, often from 10,000:1 to 1:1, regularly from 5,000:1 to 5:1, preferably from 5,000:1 to 10:1, more preferably from 2,000:1 to 30:1, even more preferably from 2,000:1 to 100:1 and in particular from 1,000:1 to 100:1. According to further embodiments, the weight ratio of the component 1) and the component 2) usually is in the range of from 1:1 to 1:1000, often from 1:1 to 1:100, regularly from 1:1 to 1:50, preferably from 1:1 to 1:20, more preferably from 1:1 to 1:10, even more preferably from 1:1 to 1:4 and in particular from 1:1 to 1:2. According to further embodiments, the weight ratio of the component 1) and the component 2) usually is in the range of from 10:1 to 1:20,000, often from 1:1 to 1:10,000, regularly from 1:5 to 1:5,000, preferably from 1:10 to 1:5,000, more preferably from 1:30 to 1:2,000, even more preferably from 1:100 to 1:2,000 to and in particular from 1:100 to 1:1,000.

In the ternary mixtures, i.e. compositions comprising the component 1) and component 2) and a compound III (component 3), the weight ratio of pesticide contained in microparticles of the invention and component 2) depends from the properties of the active substances used, usually it is in the range of from 1:100 to 100:1, regularly from 1:50 to 50:1, preferably from 1:20 to 20:1, more preferably from 1:10 to 10:1 and in particular from 1:4 to 4:1, and the weight ratio of component 1) and component 3) usually it is in the range of from 1:100 to 100:1, regularly from 1:50 to 50:1, preferably from 1:20 to 20:1, more preferably from 1:10 to 10:1 and in particular from 1:4 to 4:1. Any further active components are, if desired, added in a ratio of from 20:1 to 1:20 to the component 1). These ratios are also suitable for mixtures applied by seed treatment.

When mixtures comprising microbial pesticides are employed in crop protection, the application rates range from 1 x 10⁶ to 5 x 10¹⁶ (or more) CFU/ha, preferably from 1 x 10⁸ to 1 x 10¹³ CFU/ha, and even more preferably from 1 x 10⁹ to 5 x 10¹⁵ CFU/ha and in particular from 1 x 10¹² to 5 x 10¹⁴ CFU/ha. In the case of nematodes as microbial pesticides (e. g. *Steinernema feltiae*), the application rates regularly range from 1 x 10⁵ to 1 x 10¹² (or more), preferably from 1 x 10⁸ to 1 x 10¹¹, more preferably from 5 x 10⁸ to 1 x 10¹⁰ individuals (e. g. in the form of eggs, juvenile or any other live stages, preferably in an infective juvenile stage) per ha.
When mixtures comprising microbial pesticides are employed in seed treatment, the application rates generally range from 1 x 10⁶ to 1 x 10¹² (or more) CFU/seed, preferably from 1 x 10⁶ to 1 x 10⁹ CFU/seed. Furthermore, the application rates with respect to seed treatment generally range from 1 x 10⁷ to 1 x 10¹⁴ (or more) CFU per 100 kg of seed, preferably from 1 x 10⁹ to 1 x 10¹² CFU per 100 kg of seed.

Preference is given to mixtures comprising as component 2) at least one active substance selected from inhibitors of complex III at Qₒ site in group A), more preferably selected from compounds (A.1.1), (A.1.4), (A.1.8), (A.1.9), (A.1.10), (A.1.12), (A.1.13), (A.1.14), (A.1.17), (A.1.21), (A.1.25), (A.1.34) and (A.1.35); particularly selected from (A.1.1), (A.1.4), (A.1.8), (A.1.9), (A.1.13), (A.1.14), (A.1.17), (A.1.25), (A.1.34) and (A.1.35).
Preference is also given to mixtures comprising as component 2) at least one active substance selected from inhibitors of complex III at Qᵢ site in group A), more preferably selected from compounds (A.2.1), (A.2.3) and (A.2.4); particularly selected from (A.2.3) and (A.2.4). Preference is also given to mixtures comprising as component 2) at least one active substance selected from inhibitors of complex II in group A), more preferably selected from compounds (A.3.2), (A.3.3), (A.3.4), (A.3.7), (A.3.9), (A.3.11), (A.3.12), (A.3.15), (A.3.16), (A.3.17), (A.3.18), (A.3.19), (A.3.20), (A.3.21), (A.3.22), (A.3.23), (A.3.28), (A.3.31), (A.3.32), (A.3.33), (A.3.34), (A.3.35), (A.3.36), (A.3.37), (A.3.38) and (A.3.39); particularly selected from (A.3.2), (A.3.3), (A.3.4), (A.3.7), (A.3.9), (A.3.12), (A.3.15), (A.3.17), (A.3.19), (A.3.22), (A.3.23), (A.3.31), (A.3.32), (A.3.33), (A.3.34), (A.3.35), (A.3.36), (A.3.37), (A.3.38) and (A.3.39).
Preference is also given to mixtures comprising as component 2) at least one active substance selected from other respiration inhibitors in group A), more preferably selected from compounds (A.4.5) and (A.4.11); in particular (A.4.11).

Preference is also given to mixtures comprising as component 2) at least one active substance selected from C14 demethylase inhibitors in group B), more preferably selected from compounds (B.1.4), (B.1.5), (B.1.8), (B.1.10), (B.1.11), (B.1.12), (B.1.13), (B.1.17), (B.1.18), (B.1.21), (B.1.22), (B.1.23), (B.1.25), (B.1.26), (B.1.29), (B.1.34), (B.1.37), (B.1.38), (B.1.43), (B.1.46), (B.1.53), (B.1.54) and (B.1.55); particularly selected from (B.1.5), (B.1.8), (B.1.10), (B.1.17), (B.1.22), (B.1.23), (B.1.25), (B.1.33), (B.1.34), (B.1.37), (B.1.38), (B.1.43) and (B.1.46). Preference is also given to mixtures comprising as component 2) at least one active substance selected from Delta14-reductase inhibitors in group B), more preferably selected from compounds (B.2.4), (B.2.5), (B.2.6) and (B.2.8); in particular (B.2.4).
Preference is also given to mixtures comprising as component 2) at least one active substance selected from phenylamides and acyl amino acid fungicides in group C), more preferably selected from compounds (C.1.1), (C.1.2), (C.1.4) and (C.1.5); particularly selected from (C.1.1) and (C.1.4).
Preference is also given to mixtures comprising as component 2) at least one active substance selected from other nucleic acid synthesis inhibitors in group C), more preferably selected from compounds (C.2.6), (C.2.7) and (C.2.8).
Preference is also given to mixtures comprising as component 2) at least one active substance selected from group D), more preferably selected from compounds (D.1.1), (D.1.2), (D.1.5), (D.2.4) and (D.2.6); particularly selected from (D.1.2), (D.1.5) and (D.2.6).
Preference is also given to mixtures comprising as component 2) at least one active substance selected from group E), more preferably selected from compounds (E.1.1), (E.1.3), (E.2.2) and (E.2.3); in particular (E.1.3).
Preference is also given to mixtures comprising as component 2) at least one active substance selected from group F), more preferably selected from compounds (F.1.2), (F.1.4) and (F.1.5). Preference is also given to mixtures comprising as component 2) at least one active substance selected from group G), more preferably selected from compounds (G.3.1), (G.3.3), (G.3.6), (G.5.1), (G.5.3), (G.5.4), (G.5.5), G.5.6), G.5.7), (G.5.8), (G.5.9), (G.5.10) and (G.5.11); particularly selected from (G.3.1), (G.5.1) and (G.5.3).
Preference is also given to mixtures comprising as component 2) at least one active substance selected from group H), more preferably selected from compounds (H.2.2), (H.2.3), (H.2.5), (H.2.7), (H.2.8), (H.3.2), (H.3.4), (H.3.5), (H.4.9) and (H.4.10); particularly selected from (H.2.2), (H.2.5), (H.3.2), (H.4.9) and (H.4.10).
Preference is also given to mixtures comprising as component 2) at least one active substance selected from group I), more preferably selected from compounds (1.2.2) and (1.2.5). Preference is also given to mixtures comprising as component 2) at least one active substance selected from group J), more preferably selected from compounds (J.1.2), (J.1.5), (J.1.8), (J.1.11) and (J.1.12); in particular (J.1.5).
Preference is also given to mixtures comprising as component 2) at least one active substance selected from group K), more preferably selected from compounds (K.1.41), (K.1.42), (K.1.44), (K.1.47), (K.1.57), (K.1.58) and (K.1.59); particularly selected from (K.1.41), (K.1.44), (K.1.47), (K.1.57), (K.1.58) and (K.1.59).

The biopesticides from group L1) and/or L2) may also have insecticidal, acaricidal, molluscidal, pheromone, nematicidal, plant stress reducing, plant growth regulator, plant growth promoting and/or yield enhancing activity. The biopesticides from group L3) and/or L4) may also have fungicidal, bactericidal, viricidal, plant defense activator, plant stress reducing, plant growth regulator, plant growth promoting and/or yield enhancing activity. The biopesticides from group L5) may also have fungicidal, bactericidal, viricidal, plant defense activator, insecticidal, acaricidal, molluscidal, pheromone and/or nematicidal activity.
The microbial pesticides, in particular those from groups L1), L3) and L5), embrace not only the isolated, pure cultures of the respective microorganism as defined herein, but also its cell-free extract, its suspension in a whole broth culture and a metabolite-containing culture medium or a purified metabolite obtained from a whole broth culture of the microorganism.
Many of these biopesticides have been deposited under deposition numbers mentioned herein (the prefixes such as ATCC or DSM refer to the acronym of the respective culture collection, for details see e. g. here: http://www. wfcc.info/ccinfo/collection/by acronym/), are referred to in literature, registered and/or are commercially available: mixtures of *Aureobasidium pullulans* DSM 14940 and DSM 14941 isolated in 1989 in Konstanz, Germany (e. g. blastospores in BlossomProtect^{®} from bio-ferm GmbH, Austria), *Azospirillum brasilense* Sp245 originally isolated in wheat region of South Brazil (Passo Fundo) at least prior to 1980 (BR 11005; e. g. GELFIX^{®} Gramíneas from BASF Agricultural Specialties Ltd., Brazil), *A. brasilense* strains Ab-V5 and Ab-V6 (e. g. in AzoMax from Novozymes BioAg Produtos papra Agricultura Ltda., Quattro Barras, Brazil or Simbiose-Maíz^{®} from Simbiose-Agro, Brazil; Plant Soil 331, 413-425, 2010), *Bacillus amyloliquefaciens* strain AP-188 (NRRL B-50615 and B-50331; US 8,445,255); *B. amyloliquefaciens* ssp. *plantarum* strains formerly also sometimes referred to as *B. subtilis,* recently together with *B. methylotrophicus,* and *B. velezensis* classified as *B. velezensis* (Int. J. Syst. Evol. Microbiol. 66, 1212-1217, 2016): *B. a.* ssp. *plantarum* or *B. velezensis* D747 isolated from air in Kikugawa-shi, Japan (US 20130236522 A1; FERM BP-8234; e. g. Double Nickel^{™} 55 WDG from Certis LLC, USA), *B. a.* ssp. *plantarum* or *B. velezensis* FZB24 isolated from soil in Brandenburg, Germany (also called SB3615; DSM 96-2; J. Plant Dis. Prot. 105, 181-197, 1998; e. g. Taegro^{®} from Novozyme Biologicals, Inc., USA), *B. a.* ssp. *plantarum* or *B. velezensis* FZB42 isolated from soil in Brandenburg, Germany (DSM 23117; J. Plant Dis. Prot. 105, 181-197, 1998; e. g. RhizoVital^{®} 42 from AbiTEP GmbH, Germany), *B. a.* ssp. *plantarum* or *B. velezensis* MBI600 isolated from faba bean in Sutton Bonington, Nottinghamshire, U.K. at least before 1988 (also called 1430; NRRL B-50595; US 2012/0149571 A1; e. g. Integral^{®} from BASF Corp., USA), *B. a.* ssp. *plantarum* or *B. velezensis* QST-713 isolated from peach orchard in 1995 in California, U.S.A. (NRRL B-21661; e. g. Serenade^{®} MAX from Bayer Crop Science LP, USA), *B. a.* ssp. *plantarum* or *B. velezensis* TJ1000 isolated in 1992 in South Dakoda, U.S.A. (also called 1BE; ATCC BAA-390; CA 2471555 A1; e. g. QuickRoots^{™} from TJ Technologies, Watertown, SD, USA); *B. firmus* CNCM I-1582, a variant of parental strain EIP-N1 (CNCM I-1556) isolated from soil of central plain area of Israel (WO 2009/126473, US 6,406,690; e. g. Votivo^{®} from Bayer CropScience LP, USA), *B. pumilus* GHA 180 isolated from apple tree rhizosphere in Mexico (IDAC 260707-01; e. g. PRO-MIX^{®} BX from Premier Horticulture, Quebec, Canada), *B. pumilus* INR-7 otherwise referred to as BU-F22 and BU-F33 isolated at least before 1993 from cucumber infested by *Erwinia tracheiphila* (NRRL B-50185, NRRL B-50153; US 8,445,255), *B. pumilus* KFP9F isolated from the rhizosphere of grasses in South Africa at least before 2008 (NRRL B-50754; WO 2014/029697; e. g. BAC-UP or FUSION-P from BASF Agricultural Specialities (Pty) Ltd., South Africa), *B. pumilus* QST 2808 was isolated from soil collected in Pohnpei, Federated States of Micronesia, in 1998 (NRRL B-30087; e. g. Sonata^{®} or Ballad^{®} Plus from Bayer Crop Science LP, USA), *B. simplex* ABU 288 (NRRL B-50304; US 8,445,255), *B. subtilis* FB17 also called UD 1022 or UD10-22 isolated from red beet roots in North America (ATCC PTA-11857; System. Appl. Microbiol. 27, 372-379, 2004; US 2010/0260735; WO 2011/109395); *B. thuringiensis* ssp. *aizawai* ABTS-1857 isolated from soil taken from a lawn in Ephraim, Wisconsin, U.S.A., in 1987 (also called ABG-6346; ATCC SD-1372; e. g. XenTari^{®} from BioFa AG, Münsingen, Germany), *B. t.* ssp. *kurstaki* ABTS-351 identical to HD-1 isolated in 1967 from diseased Pink Bollworm black larvae in Brownsville, Texas, U.S.A. (ATCC SD-1275; e. g. Dipel^{®} DF from Valent BioSciences, IL, USA), *B. t.* ssp. *kurstaki* SB4 isolated from E. *saccharina* larval cadavers (NRRL B-50753; e. g. Beta Pro^{®} from BASF Agricultural Specialities (Pty) Ltd., South Africa), *B. t.* ssp. *tenebrionis* NB-176-1, a mutant of strain NB-125, a wild type strain isolated in 1982 from a dead pupa of the beetle Tenebrio molitor (DSM 5480; EP 585 215 B1; e. g. Novodor^{®} from Valent BioSciences, Switzerland), *Beauveria bassiana* GHA (ATCC 74250; e. g. BotaniGard^{®} 22WGP from Laverlam Int. Corp., USA), *B. bassiana* JW-1 (ATCC 74040; e. g. Naturalis^{®} from CBC (Europe) S.r.l., Italy), B. *bassiana* PPRI 5339 isolated from the larva of the tortoise beetle *Conchyloctenia punctata* (NRRL 50757; e. g. BroadBand^{®} from BASF Agricultural Specialities (Pty) Ltd., South Africa), *Bradyrhizobium elkanii* strains SEMIA 5019 (also called 29W) isolated in Rio de Janeiro, Brazil and SEMIA 587 isolated in 1967 in the State of Rio Grande do Sul, from an area previously inoculated with a North American isolate, and used in commercial inoculants since 1968 (Appl. Environ. Microbiol. 73(8), 2635, 2007; e. g. GELFIX 5 from BASF Agricultural Specialties Ltd., Brazil), *B. japonicum* 532c isolated from Wisconsin field in U.S.A. (Nitragin 61A152; Can. J. Plant. Sci. 70, 661-666, 1990; e. g. in Rhizoflo^{®}, Histick^{®}, Hicoat^{®} Super from BASF Agricultural Specialties Ltd., Canada), *B. japonicum* E-109 variant of strain USDA 138 (INTA E109, SEMIA 5085; Eur. J. Soil Biol. 45, 28-35, 2009; Biol. Fertil. Soils 47, 81-89, 2011); *B. japonicum* strains deposited at SEMIA known from Appl. Environ. Microbiol. 73(8), 2635, 2007: SEMIA 5079 isolated from soil in Cerrados region, Brazil by Embrapa-Cerrados used in commercial inoculants since 1992 (CPAC 15; e. g. GELFIX 5 or ADHERE 60 from BASF Agricultural Specialties Ltd., Brazil), *B. japonicum* SEMIA 5080 obtained under lab condtions by Embrapa-Cerrados in Brazil and used in commercial inoculants since 1992, being a natural variant of SEMIA 586 (CB1809) originally isolated in U.S.A. (CPAC 7; e. g. GELFIX 5 or ADHERE 60 from BASF Agricultural Specialties Ltd., Brazil); *Burkholderia sp.* A396 isolated from soil in Nikko, Japan, in 2008 (NRRL B-50319; WO 2013/032693; Marrone Bio Innovations, Inc., USA), *Coniothyrium minitans* CON/M/91-08 isolated from oilseed rape (WO 1996/021358; DSM 9660; e. g. Contans^{®} WG, Intercept^{®} WG from Bayer CropScience AG, Germany), harpin (alpha-beta) protein (Science 257, 85-88, 1992; e. g. Messenger^{™} or HARP-N-Tek from Plant Health Care plc, U.K.), *Helicoverpa armigera* nucleopolyhedrovirus (HearNPV) (J. Invertebrate Pathol. 107, 112-126, 2011; e. g. Helicovex^{®} from Adermatt Biocontrol, Switzerland; Diplomata^{®} from Koppert, Brazil; Vivus^{®} Max from AgBiTech Pty Ltd., Queensland, Australia), *Helicoverpa zea* single capsid nucleopolyhedrovirus (HzSNPV) (e. g. Gemstar^{®} from Certis LLC, USA), *Helicoverpa zea* nucleopolyhedrovirus ABA-NPV-U (e. g. Heligen^{®} from AgBiTech Pty Ltd., Queensland, Australia), *Heterorhabditis bacteriophora* (e. g. Nemasys^{®} G from BASF Agricultural Specialities Limited, UK), *Isaria fumosorosea* Apopka-97 isolated from mealy bug on gynura in Apopka, Florida, U.S.A. (ATCC 20874; Biocontrol Science Technol. 22(7), 747-761, 2012; e. g. PFR-97^{™} or PreFeRal^{®} from Certis LLC, USA), *Metarhizium anisopliae* var. *anisopliae* F52 also called 275 or V275 isolated from codling moth in Austria (DSM 3884, ATCC 90448; e. g. Met52^{®} Novozymes Biologicals BioAg Group, Canada), *Metschnikowia fructicola* 277 isolated from grapes in the central part of Israel (US 6,994,849; NRRL Y-30752; e. g. formerly Shemer^{®} from Agrogreen, Israel), *Paecilomyces ilacinus* 251 isolated from infected nematode eggs in the Philippines (AGAL 89/030550; WO1991/02051; Crop Protection 27, 352-361, 2008; e. g. BioAct^{®}from Bayer CropScience AG, Germany and MeloCon^{®} from Certis, USA), *Paenibacillus alvei* NAS6G6 isolated from the rhizosphere of grasses in South Africa at least before 2008 (WO 2014/029697; NRRL B-50755; e.g. BAC-UP from BASF Agricultural Specialities (Pty) Ltd., South Africa), *Paenibacillus* strains isolated from soil samples from a variety of European locations including Germany: *P. epiphyticus* Lu17015 (WO 2016/020371; DSM 26971), *P. polymyxa* ssp. *plantarum* Lu16774 (WO 2016/020371; DSM 26969), *P. p.* ssp. *plantarum* strain Lu17007 (WO 2016/020371; DSM 26970); *Pasteuria nishizawae* Pn1 isolated from a soybean field in the mid-2000s in Illinois, U.S.A. (ATCC SD-5833; Federal Register 76(22), 5808, February 2, 2011; e.g. Clariva^{™} PN from Syngenta Crop Protection, LLC, USA), *Penicillium bilaiae* (also called *P. bilaii*) strains ATCC 18309 (= ATCC 74319), ATCC 20851 and/or ATCC 22348 (= ATCC 74318) originally isolated from soil in Alberta, Canada (Fertilizer Res. 39, 97-103, 1994; Can. J. Plant Sci. 78(1), 91-102, 1998; US 5,026,417, WO 1995/017806; e. g. Jump Start^{®}, Provide^{®} from Novozymes Biologicals BioAg Group, Canada), *Reynoutria sachalinensis* extract (EP 0307510 B1; e. g. Regalia^{®} SC from Marrone Biolnnovations, Davis, CA, USA or Milsana^{®} from BioFa AG, Germany), *Steinernema carpocapsae* (e. g. Millenium^{®} from BASF Agricultural Specialities Limited, UK), *S. feltiae* (e. g. Nemashield^{®} from BioWorks, Inc., USA; Nemasys^{®} from BASF Agricultural Specialities Limited, UK), *Streptomyces microflavus* NRRL B-50550 (WO 2014/124369; Bayer CropScience, Germany), *Trichoderma asperelloides* JM41R isolated in South Africa (NRRL 50759; also referred to as *T. fertile*; e. g. Trichoplus^{®} from BASF Agricultural Specialities (Pty) Ltd., South Africa), *T. harzianum* T-22 also called KRL-AG2 (ATCC 20847; BioControl 57, 687-696, 2012; e. g. Plantshield^{®} from BioWorks Inc., USA or SabrEx^{™} from Advanced Biological Marketing Inc., Van Wert, OH, USA).

According to another embodiment of the mixtures, the at least one pesticide II is selected from the groups L1) to L5):
L1) Microbial pesticides with fungicidal, bactericidal, viricidal and/or plant defense activator activity: *Aureobasidium pullulans* DSM 14940 and DSM 14941 (L1.1), *Bacillus amyloliquefaciens* AP-188 (L.1.2), *B. amyloliquefaciens* ssp. *plantarum* D747 (L.1.3), *B. amyloliquefaciens* ssp. *plantarum* FZB24 (L.1.4), *B. amyloliquefaciens* ssp. *plantarum* FZB42 (L.1.5), B. *amyloliquefaciens* ssp. *plantarum* MBI600 (L.1.6), B. *amyloliquefaciens* ssp. *plantarum* QST-713 (L.1.7), *B. amyloliquefaciens* ssp. *plantarum* TJ1000 (L.1.8), *B. pumilus* GB34 (L.1.9), *B. pumilus* GHA 180 (L.1.10), *B. pumilus* INR-7 (L.1.11), *B. pumilus* KFP9F (L.1.12), *B. pumilus* QST 2808 (L.1.13), *B. simplex* ABU 288 (L.1.14), B. *subtilis* FB17 (L.1.15), *Coniothyrium minitans* CON/M/91-08 (L.1.16), *Metschnikowia fructicola* NRRL Y-30752 (L.1.17), *Paenibacillus alvei* NAS6G6 (L.1.18), *P. epiphyticus* Lu17015 (L.1.25), *P. polymyxa* ssp. *plantarum* Lu16774 (L.1.26), *P. p.* ssp. *plantarum* strain Lu17007 (L.1.27), *Penicillium bilaiae* ATCC 22348 (L.1.19), *P. bilaiae* ATCC 20851 (L.1.20), *Penicillium bilaiae* ATCC 18309 (L.1.21), *Streptomyces microflavus* NRRL B-50550 (L.1.22), *Trichoderma asperelloides* JM41R (L.1.23), *T. harzianum* T-22 (L.1.24);
L2) Biochemical pesticides with fungicidal, bactericidal, viricidal and/or plant defense activator activity: harpin protein (L.2.1), *Reynoutria sachalinensis* extract (L.2.2);
L3) Microbial pesticides with insecticidal, acaricidal, molluscidal and/or nematicidal activity: *Bacillus firmus* I-1582 (L.3.1); *B. thuringiensis* ssp. *aizawai* ABTS-1857 (L.3.2), *B. t.* ssp. *kurstaki* ABTS-351 (L.3.3), *B. t.* ssp. *kurstaki* SB4 (L.3.4), *B. t.* ssp. *tenebrionis* NB-176-1 (L.3.5), *Beauveria bassiana* GHA (L.3.6), *B. bassiana* JW-1 (L.3.7), *B. bassiana* PPRI 5339 (L.3.8), *Burkholderia* sp. A396 (L.3.9), *Helicoverpa armigera* nucleopolyhedrovirus (HearNPV) (L.3.10), *Helicoverpa zea* nucleopolyhedrovirus (HzNPV) ABA-NPV-U (L.3.11), *Helicoverpa zea* single capsid nucleopolyhedrovirus (HzSNPV) (L.3.12), *Heterohabditis bacteriophora* (L.3.13), *Isaria fumosorosea* Apopka-97 (L.3.14), *Metarhizium anisopliae* var. *anisopliae* F52 (L.3.15), *Paecilomyces lilacinus* 251 (L.3.16), *Pasteuria nishizawae* Pn1 (L.3.17), *Steinernema carpocapsae* (L.3.18), S. *feltiae* (L.3.19);
L4) Biochemical pesticides with insecticidal, acaricidal, molluscidal, pheromone and/or nematicidal activity: cis-jasmone (L.4.1), methyl jasmonate (L.4.2), Quillay extract (L.4.3);
L5) Microbial pesticides with plant stress reducing, plant growth regulator, plant growth promoting and/or yield enhancing activity: *Azospirillum brasilense* Ab-V5 and Ab-V6 (L.5.1), *A. brasilense* Sp245 (L.5.2), *Bradyrhizobium elkanii* SEMIA 587 (L.5.3), *B. elkanii* SEMIA 5019 (L.5.4), *B.japonicum* 532c (L.5.5), *B. japonicum* E-109 (L.5.6), *B. japonicum* SEMIA 5079 (L.5.7), *B. japonicum* SEMIA 5080 (L.5.8).

In one embodiment, compositions of the invention do not contain saflufenacil.

In one embodiment, compositions of the invention comprise such mixing partners inside the microparticle. In one embodiment, compositions of the invention comprise such mixing partners outside the microparticle. In one embodiment, compositions of the invention comprise such mixing partners inside and outside the microparticle.

Moreover, it may be useful to apply the fluopyram containing compositions of the invention, separately or in combination with other pesticides as listed as suitable mixing partners, especially fungicides, jointly as a mixture with yet further plant protection agents, for example with agents for controlling pests or phytopathogenic fungi or bacteria. Also of interest is the miscibility with mineral salt solutions which are employed for alleviating nutritional and trace element deficiencies.
Nonphytotoxic oils and oil concentrates may also be added.
In one embodiment, compositions of the invention are not applied, separately or in combination with saflufenacil.

The present invention offers the following advantages:
It is easy and economical to carry out.
Microparticles and compositions according to the invention are compatible with a broad range of other pesticides and formulations thereof, in particular pesticides with a solubility in water of at least one g/l, such as auxins, bentazone, diquat and paraquat and their formulations. In particular, the compatibility with dicamba, glyphosate, glufosinate, MCPA, 2,4-dichlorophenoxyacetic acid, 2,4,5-Trichlorophenoxyacetic acid, bentazone, diquat and paraquat and their formulations is achieved.
Microparticles and compositions according to the can be applied with a high flexibility with respect to the timing of the application and that
Microparticles and compositions according to the invention show both high physical and chemical stability over prolonged storage periods while maintaining its biological efficacy.
Moreover, they are compatible with tank-mix partners which are commonly combined with fluopyram. Upon dilution with water, the formulation should give a stable aqueous composition of fluopyram without forming coarse material or a supernatant liquid.

Compositions according to the invention are very efficient for controlling fungi.
Compositions according to the invention show both high physical and chemical stability over prolonged storage periods while maintaining their biological efficacy.

Upon dilution with water, the compositions according to the invention give a stable aqueous composition of fluopyram and form no or only little coarse material or supernatant liquid. Microparticles and compositions according to the invention have very beneficial phytotoxicity. Microparticles and compositions according to the invention show reduced halo effect. Microparticles and compositions according to the invention have an excellent release profile of the pesticides. In particular, it is possible to adjust a slow release of the pesticide.

The following examples are intended to further illustrate the present invention without limiting its scope in any way.

### Examples

Particle size Distribution (PSD) was determined by statistic laser scattering using a Malvern Mastersizer 2000 according to European norm ISO 13320 EN. The data were treated according to the Mie-Theory by software using a "universal model" provided by Malvern Instruments. Important parameters are the dₙ-values for n = 10, 50 and 90, the d₁₀, d₅₀ and d₉₀.

### Ingredients:

Surfactant 1: 20 wt. % aqueous solution of poly(2-acrylamido-2-methylpropane sulfonic acid) sodium salt with pH 2.5-4;
Surfactant 2: Sodium salt of naphthalene sulfonate condensate (NSC)
Surfactant 3: graft polymers of polyethylene glycol and poly methylmethacrylate
   Pre-condensate P1: 70% w/w aqueous solution of etherified melamine formaldehyde pre-condensate, CAS 68002-20-0
   Active Ingredient: N-[2-[3-Chloro-5-(trifluoromethyl)-2-pyridinyl]ethyl]-2-(trifluoromethyl)benzamide (Fluopyram), purity 98.6%

### Example M1: Preparation of millbase 1

20 g Surfactant 2 and 4 g Surfactant 3 were homogenized in 370.32 g demineralized water. 405.68 g of the Active ingredient was stirred in and dispersed with an UltraTurrax.
Subsequently, the premix was milled with a basket mill till the required PSD is reached. The final D50 was 1.8 µm and the D90 5.1 µm.
At the end, the suspension was sieved through a 300µm sieve.

### Example M2: Preparation of millbase 2

20 g Surfactant 2 and 4 g Surfactant 3 were homogenized in 370.32 g demineralized water. 405.68 g of the Active ingredient was stirred in and dispersed with an UltraTurrax. Subsequently, the premix was milled with a basket mill till the required PSD is reached. The final D50 was 3.8 µm and the D90 11.3 µm.
At the end, the suspension was sieved through a 300µm sieve.

### Example M3: Preparation of millbase 3

20 g Surfactant 2 and 4 g Surfactant 3 were homogenized in 370.32 g demineralized water. 405.68 g of the Active ingredient was stirred in and dispersed with an UltraTurrax. Subsequently, the premix was milled with a basket mill till the required PSD is reached. The final D50 was 6.7 µm and the D90 19.4 µm.
At the end, the suspension was sieved through a 300µm sieve.

### Example 1:

88.45 g of demineralized water was mixed with Surfactant 1 (11.38 g) and 3.57 g of Pre-condensate P1 in a 250 ml batch reactor using a half moon stirrer (200 rpm). 66.52 g of millbase M1 containing 33.25 g of fluopyram (D90 5.1), 1.67 g of Surfactant 2, 0.34 g of Surfactant 3, and 31.26 g of demineralized water was added to the batch reactor and homogenized prior to the addition of 7.64 g of citric acid. The mixture was heated to 60 °C and kept for 6 h at 60 °C. After cooling to room temperature, the mixture was sieved over a sieve with 800 µm mesh size. A 10 wt.% xanthan gum solution in glycerol was added to the suspension to obtain a final xanthan gum content of 0.12 wt.% based on the weight of the formulation. The D50 was 2.83 µm and the D90 4.97 µm.

### Example 2:

96.76 g of demineralized water was mixed with Surfactant 1 (11.38 g) and 7.14 g of Pre-condensate P1 in a 250 ml batch reactor using a half moon stirrer (200 rpm). 63 g of millbase M1 containing 31.5 g of fluopyram (D90 5.1), 1.58 g of Surfactant 2 and 0.32 g of Surfactant 3, and 29.61 g of demineralized water was added to the batch reactor and homogenized prior to the addition of 12.78 g of citric acid. The mixture was heated to 60 °C and kept for 6 h at 60 °C. After cooling to room temperature, the mixture was sieved over a sieve with 800 µm mesh size. A 10 wt.% xanthan gum solution in glycerol was added to the suspension to obtain a final xanthan gum content of 0.12 wt.% based on the weight of the formulation. The D50 was 3.70 µm and the D90 6.52 µm.

### Example 3:

87.44 g of demineralized water was mixed with Surfactant 1 (11.38 g) and 10.71 g of Pre-condensate P1 in a 250 ml batch reactor using a half moon stirrer (200 rpm). 59.51 g of millbase M1 containing 29.75 g of fluopyram, 1.49 g of Surfactant 2 and 0.30 g of Surfactant 3, and 27.97 g of demineralized water was added to the batch reactor and homogenized prior to the addition of 16.60 g of citric acid. The mixture was heated to 60 °C and kept for 6 h at 60 °C. After cooling to room temperature, the mixture was sieved over a sieve with 800 µm mesh size. A 10 wt.% xanthan gum solution in glycerol was added to the suspension to obtain a final xanthan gum content of 0.12 wt.% based on the weight of the formulation. The D50 was 5.04 µm and the D90 8.67 µm.

### Example 4:

86.94 g of demineralized water was mixed with Surfactant 1 (11.38 g) and 14.29 g of Pre-condensate P1 in a 250 ml batch reactor using a half moon stirrer (200 rpm). 56.00 g of millbase M1 containing 28.00 g of fluopyram (D90 5.1), 1.40 g of Surfactant 2 and 0.28 g of Surfactant 3, and 26.32 g of demineralized water was added to the batch reactor and homogenized prior to the addition of 20.64 g of citric acid. The mixture was heated to 60 °C and kept for 6 h at 60 °C. After cooling to room temperature, the mixture was sieved over a sieve with 800 µm mesh size. A 10 wt.% xanthan gum solution in glycerol was added to the suspension to obtain a final xanthan gum content of 0.42 wt.% based on the weight of the formulation. The D50 was 6.33 µm and the D90 10.45 µm.

### Example 5:

85.99 g of demineralized water was mixed with Surfactant 1 (11.38 g) and 21.43 g of Pre-condensate P1 in a 250 ml batch reactor using a half moon stirrer (200 rpm). 49.01 g of millbase M1 containing 24.50 g of fluopyram (D90 5.1), 1.23 g of Surfactant 2 and 0.25 g of Surfactant 3, and 23.03 g of demineralized water was added to the batch reactor and homogenized prior to the addition of 28.30 g of citric acid. The mixture was heated to 60 °C and kept for 6 h at 60 °C. After cooling to room temperature, the mixture was sieved over a sieve with 800 µm mesh size. A 10 wt.% xanthan gum solution in glycerol was added to the suspension to obtain a final xanthan gum content of 0.12 wt.% based on the weight of the formulation. The D50 was 8.71 µm and the D90 13.03 µm.

### Example 6:

86.94 g of demineralized water was mixed with Surfactant 1 (11.38 g) and 14.29 g of Pre-condensate P1 in a 250 ml batch reactor using a half moon stirrer (200 rpm). 56.00 g of millbase M1 containing 28.00 g of fluopyram (d90= 5.1 µm), 1.40 g of Surfactant 2 and 0.28 g of Surfactant 3, and 26.32 g of demineralized water was added to the batch reactor and homogenized prior to the addition of 0.65 g of citric acid. The mixture was heated to 40 °C and kept for 1 h at this temperature. Afterwards the temperature was increased to 60 °C and kept for 1 hour. After cooling to room temperature, the mixture was sieved over a sieve with 800 µm mesh size. A 10 wt.% xanthan gum solution in glycerol was added to the suspension to obtain a final xanthan gum content of 0.2 wt.% based on the weight of the formulation. The D90 was 5.5 µm.

### Example 7:

74.81 g of demineralized water was mixed with Surfactant 1 (11.38 g) and 14.29 g of Pre-condensate P1 in a 250 ml batch reactor using a half moon stirrer (200 rpm). 56.00 g of millbase M2 containing 28.00 g of fluopyram (D90= 11.3 µm), 1.40 g of Surfactant 2 and 0.28 g of Surfactant 3, and 26.32 g of demineralized water was added to the batch reactor and homogenized prior to the addition of 0.74 g of citric acid. The mixture was heated to 40 °C and kept for 1 h at this temperature. Afterwards the temperature was increased to 60 °C and kept for 1 hour. After cooling to room temperature, the mixture was sieved over a sieve with 800 µm mesh size. A 10 wt.% xanthan gum solution in glycerol was added to the suspension to obtain a final xanthan gum content of 0.2 wt.% based on the weight of the formulation. The D90 was 16.9 µm.

### Example 8:

74.81 g of demineralized water was mixed with Surfactant 1 (11.38 g) and 14.29 g of Pre-condensate P1 in a 250 ml batch reactor using a half moon stirrer (200 rpm). 56.00 g of millbase M3 containing 28.00 g of fluopyram (D90= 19.4 µm), 1.40 g of Surfactant 2 and 0.28 g of Surfactant 3, and 26.32 g of demineralized water was added to the batch reactor and homogenized prior to the addition of 0.71 g of citric acid. The mixture was heated to 40 °C and kept for 1 h at this temperature. Afterwards the temperature was increased to 60 °C and kept for 1 hour. After cooling to room temperature, the mixture was sieved over a sieve with 800 µm mesh size. A 10 wt.% xanthan gum solution in glycerol was added to the suspension to obtain a final xanthan gum content of 0.2 wt.% based on the weight of the formulation. The D90 was 23.6 µm.

### Release test into surfactant solution:

In a glass beaker, equipped with a magnetic stirrer, 100 ml of an aqueous 10% solution of an ethylene-oxide / propylene oxide block co-polymer surfactant was added. To this solution 50 µl of the formulation were added and after 10 min an aliquot was taken for analysis of free fluopyram. For this analysis, the aliquot was firstly filtered through a 22 µm syringe filter, then injected into an HPLC equipment for quantitative analysis of fluopyram. The value obtained represents the released fluopyram in a 10% surfactant solution after 10 minutes at room temperature (21° C).

Data from release tests show that a slower release of fluopyram can be achieved by increasing the amino resin content relative to the fluopyram content. In Table 1, the amino resin content in the formulation is given as the weight percentage of the amino resin relative to the sum of fluopyram and amino resin.

**Table 1: Impact of capsule shell content on release.**

| | **Aminoresin content [%]** | **Release after 10 min [%]** |
|---|---|---|
| Example 1 | 5 | 100 |
| Example 2 | 10 | 100 |
| Example 3 | 15 | 97 |
| Example 4 | 20 | 34 |
| Example 5 | 30 | 1 |

**Table 2: Impact of Fluopyram primary particle size in millbase on release.**

| | **D90 of particles in millbase** / **µm** | **Release at 0 min** / **%** | **Release after 10 min / %** |
|---|---|---|---|
| Example 6 | 5.1 | 5 | 94 |
| Example 7 | 11.3 | 0.2 | 7.3 |
| Example 8 | 19.4 | 0.5 | 1.5 |

### Seed treatments:

Seeds are treated with formulated fluopyram and color coat red in hege bowls with an application rate of 0.075 mg fluopyram per seed. Treated seed is planted in a pasteurized sandy loam soil in 2.5-inch square plastic pots, 2 cm below the soil surface. 32 reps per treatment are planted and evaluated for halo rating approximately 7 days after planting. Halo evaluation is done on a 0-4 rating scale, where rating 4 represents a significant formation of halo, whereas rating 0 represents no formation of halo at all. Heights are evaluated approximately 14 days after planting.

**Table 3**

| Sample | **Halo Rating** |
|---|---|
| SC formulation of fluopyram (ILeVo^{®}) | 1.897 |
| Example 1 | 1.667 |
| Example 2 | 1.562 |
| Example 3 | 1.500 |
| Example 4 | 0.630 |
| Example 5 | 0.724 |
| Untreated control | 0.000 |

## Claims

1. A microparticle composition comprising fluopyram, wherein fluopyram is present in the form of microparticles, which comprise solid fluopyram, which is surrounded or embedded by an aminoplast polymer, which is a polycondensation product of one or more amino compounds and one or more aldehydes.

2. The composition of claim 1, wherein the aminoplast polymer is selected from the groups consisting of melamine formaldehyde resins and urea formaldehyde resins.

3. The composition of any one of claims 1 or 2, wherein the amount of aminoplast polymer in the microparticle composition is from 0.5 to 40% by weight, in particular from 1 to 35% by weight, based on the total weight of aminoplast polymer and fluopyram.

4. The composition of any one of claims 1 or 2, wherein the amount of aminoplast polymer in the microparticle composition is from 15 to 40% by weight, based on the total weight of aminoplast polymer and fluopyram.

5. The composition of any one of claims 1 to 4, wherein the microparticles have a weight average particle diameter d50 in the range from 1 to 25 µm, preferably 1 to 15 µm as determined by dynamic light scattering of an aqueous dispersion of the microcapsules.

6. The composition of any one of claims 1 to 5, wherein the microparticles comprise less than 10% by weight of particles having a particle diameter of more than 50 µm, as determined by dynamic light scattering of an aqueous dispersion of the microcapsules.

7. The composition of any one of claims 1 to 6, which contain at least one anionic polymeric surfactant having a plurality of sulfate or sulfonate groups.

8. The composition of any of claims 6 to 7, where the polymeric surfactant is a homo- or copolymer of a (meth)acrylate monomer or a (meth)acrylamide monomer having a sulfonic acid group.

9. The composition of any one of claims 1 to 8, which contain at least one anionic polymeric surfactant having a plurality of sulfate or sulfonate groups and a nonionic acrylic polymer.

10. The composition of any one of claims 1 to 9, which is an aqueous suspension of the microparticles.

11. The composition of any one of claims 1 to 10, which is solid composition of the microparticles.

12. The composition of any one of claims 1 to 11, which contains one or more auxiliaries conventionally employed for the formulation of plant protection compositions.

13. A method for producing the composition of any one of any one of claims 1 to 12 which comprises the following steps:
i) providing an aqueous suspension or dispersion of solid fluopyram particles;
ii) adding an aminoplast pre-condensate to the aqueous suspension;
iii) effecting the polycondensation of the aminoplast pre-condensate.

14. The method of claim 13, where the fluopyram particles in the aqueous suspension dispersion have a weight average particle diameter d50 in the range from 0.5 to 25 µm, preferably 0.5 to 10 µm, as determined by dynamic light scattering.

15. The method of any one of claims 13 or 14, wherein step i) comprises providing a millbase containing dispersed fluopyram particles and one or more surfactants selected from contain at least one anionic polymeric surfactant having a plurality of sulfate or sulfonate groups.

16. The method of any one of claims 13 or 15, wherein the amount of aminoplastpre-condensate added in step ii) is in the range 0.5 to 40% by weight, in particular from 1 to 35% by weight and especially from 5 to 25% by weight, based on the total amount of fluopyram and aminoplast pre-condensate and calculated as solid organic matter.

17. The method of any one of claims 13 to 16, where the polycondensation of the aminoplast pre-condensate is initiated in the presence of at least one anionic polymeric surfactant having a plurality of sulfate or sulfonate groups, in particular homo- or copolymer of a (meth)acrylate monomer or (meth)acrylamide monomer having a sulfonic acid group, prior to the addition of the aminoplast precondensate in step ii).

18. The use of a microparticle composition of any of claims 1 to 12 or prepared according to processes according to claims 13 to 15 for combatting fungi or nematodes.

19. A method of controlling undesired fungi or nematodes, wherein a microparticle composition of any of claims 1 to 12 or prepared according to processes according to claims 13 to 15 is allowed to act on plants, their environment and/or on seeds.

20. Seed containing a microparticle containing fluopyram, wherein fluopyram is present in the form of microparticles, which comprise solid fluopyram, which is surrounded or embedded by an aminoplast polymer, which is a polycondensation product of one or more amino compounds and one or more aldehydes.
